# EUROPEAN PATENT SPECIFICATION

(11) **EP 2 581 864 B1**
(45) Date of publication and mention of the grant of the patent: **03.08.2016**
(21) Application number: 12161980.3
(22) Date of filing: 29.03.2012
(51) Int. Cl.: G06Q 10/10, G06F 3/048, H04M 1/725, H04L 12/58

(54) **Mobile terminal and controlling method thereof within a chat application**
Mobiles Endgerät und Steuerungsverfahren dafür innerhalb einer Chat-Anwendung
Terminal mobile et son procédé de contrôle dans une application de bavardage

(30) Priority: 10.10.2011 KR 20110102857
(43) Date of publication of application: 17.04.2013
(73) Proprietor: LG Electronics Inc., Yeongdeungpo-gu Seoul 150-721 (KR)
(72) Inventor: Park, Jungwook, 153-801 Seoul (KR); Kim, Kyeongtae, 153-801 Seoul (KR)
(74) Representative: Cabinet Plasseraud

(56) References cited:
- WO-A1-2008/034649
- WO-A1-2011/107656
- US-A1- 2003 001 890
- US-A1- 2005 108 351
- US-A1- 2005 149 622
- US-A1- 2006 206 566
- US-A1- 2007 156 910
- US-A1- 2007 174 408
- US-A1- 2007 234 226
- US-A1- 2008 144 784
- US-A1- 2009 006 979
- US-A1- 2009 222 523
- US-A1- 2010 017 483
- US-A1- 2010 087 169
- US-A1- 2010 125 801
- US-A1- 2010 267 369
- US-A1- 2011 050 601
- US-B1- 6 205 453
- US-B1- 6 557 027

## Description

### BACKGROUND OF THE INVENTION

### Field of the Invention

The present invention relates to a mobile terminal, and more particularly, to a mobile terminal and a method of controlling the mobile terminal.

### Discussion of the Related Art

A mobile terminal is a device that can be configured to perform various functions, such as data and voice communications, capturing still images and video via a camera, recording audio, playing music files and outputting music via a speaker system, and displaying images and video on a display. Some terminals include additional functionality to support game playing, while other terminals are also configured as multimedia players. More recently, mobile terminals have been configured to receive broadcast and multicast signals to permit viewing of content, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

Recently, smarts phones tend to be released by being equipped with various functions. Many ongoing efforts are made to research and develop messenger applications capable of using a chat with at least one chat partner via 3G or Wi-Fi network among applications available for the smart phone.

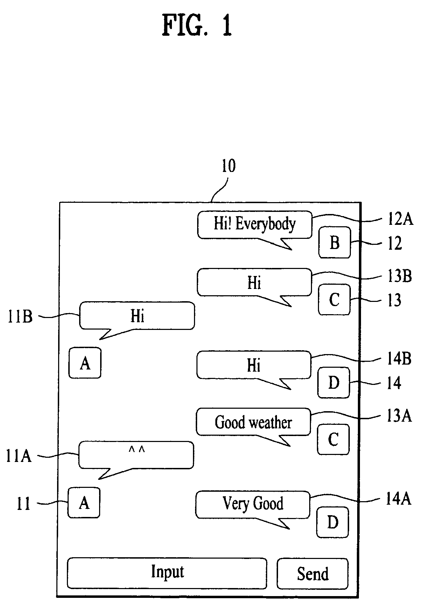

FIG. 1 is a diagram of a multi-user chat screen provided by a mobile terminal according to a related art.

Referring to FIG. 1, according to a related art, a user may have a chat with at least one or more counterpart terminals using a mobile terminal of its own.

In particular, a mobile terminal displays a message containing chat contents on a chat content display window 10 by arranging the chat contents in accordance with transmission/reception hours. In doing so, the chat contents 11A and 11B of a related art user 11 are displayed in a manner of being arranged on a left part (or a right part), while chat contents 12A, 13A, 13B, 14A and 14B of counterparts 12, 13 and 14 are separately displayed in a manner of being arranged on a right part (or a left part).

However, when a user has a multi-user chat with many counterparts by the related art method, the chat contents to be displayed on the chat content display window 10 increase mode. Hence, it may be difficult for the user to recognize the chat contents (e.g., chat subjects, chat context, etc.) between the user and the counterparts. And, it may be also difficult for the user to recognize what kind of chat contents were transceived with a prescribed one of the counterparts. Examples and possible embodiments of the prior art may be found in US 2010/087169 A1, US 6 205 453 B1, US 2007/234226 A1 or WO 2011/107656 A1.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a user is enabled to quickly recognize chat contents (e.g., speakers, chat subjects, chat contexts, etc.) of a chat with counterparts in a manner of partitioning a chat content display window into regions per counterpart belonging to a chat group and then arranging and displaying the chat contents of the chat with the corresponding counterparts on the partitioned regions per time line, respectively.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a wireless communication unit configured to at least transmit or receive a message including content of a chat with at least one terminal belonging to a chat group; a touchscreen configured to display the content of the chat with the at least one terminal on a screen; and a controller configured to partition a display region of the content of the chat within the screen into regions per terminal of the at least one terminal belonging to a chat group, each region of said regions corresponding to a terminal of the at least one terminal belonging to the chat group or to the mobile terminal, at least one region of said regions corresponding to the mobile terminal, and to arrange the content of the chat corresponding to each of the at least one terminal of the partitioned regions in order of time the content of the chat is transmitted or received, respectively. When a first region of the partitioned regions is dragged and dropped between a second region of the partitioned regions and a third region of the partitioned regions, the controller is further configured to shift the first region between the second region and third regions, and when the first region is dragged and dropped to the second region, the controller is further configured to control the wireless communication to transmit the content of the chat displayed in the first region to a contact of a terminal corresponding to the second region.

In another aspect of the present invention, a method of controlling a mobile terminal according to the present invention includes the steps of transmitting or receiving, via a wireless communication unit of the mobile terminal, a message including content of a chat with at least one terminal belonging to a chat group; displaying, on a touchscreen of the mobile terminal, the content of the chat with the at least one terminal; partitioning, by a controller of the mobile terminal, a display region of the content of the chat within the screen into regions per terminal of the at least one terminal belonging to a chat group, each region of said regions corresponding to a terminal of the at least one terminal belonging to the chat group or to the mobile terminal, at least one region of said regions corresponding to the mobile terminal; arranging, by the controller, the content of the chat corresponding to each of the at least one terminal in the partitioned regions in order of time the content of the chat is transmitted or received, respectively. When a first region of the partitioned regions is dragged and dropped between a second region of the partitioned regions and a third region of the partitioned regions, shifting the first region between the second region and third regions ; and when the first region is dragged and dropped to the second region, transmitting, via the wireless communication unit, the content of the chat displayed in the first region to a contact of a terminal corresponding to the second region..

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
FIG. 1 is a diagram of a multi-user chat screen provided by a mobile terminal according to a related art;
FIG. 2 illustrates a block diagram of a mobile terminal in accordance with one embodiment of the present invention.
FIG. 3A is a front perspective view of the mobile terminal in accordance with one embodiment of the present invention.
FIG. 3B is a rear perspective view of the mobile terminal in accordance with one embodiment of the present invention.
FIG. 4 is a flowchart of a process for controlling a screen, on which contents of a chat with counterpart terminals are displayed, according to the present invention;
FIG. 5 and FIG. 6 are diagrams of screens for a process for controlling a screen, on which contents of a chat with counterpart terminals are displayed, according to a 1^{st} embodiment of the present invention;
FIG. 7 and FIG. 8 are diagrams of screens for a process for controlling a screen, on which contents of a chat with counterpart terminals are displayed, according to a 2^{nd} embodiment of the present invention;
FIG. 9 and FIG. 10 are diagrams of screens for a process for controlling a screen, on which contents of a chat with counterpart terminals are displayed, according to a 3^{rd} embodiment of the present invention;
FIG. 11 is a diagram of a screen for a process for controlling a screen, on which contents of a chat with counterpart terminals are displayed, according to a 4^{th} embodiment of the present invention;
FIG. 12 and FIG. 13 are diagrams of screens for a process for controlling a screen, on which contents of a chat with counterpart terminals are displayed, according to a 5^{th} embodiment of the present invention;
FIG. 14 is a diagram of a screen for a process for controlling a screen, on which contents of a chat with counterpart terminals are displayed, according to a 6^{th} embodiment of the present invention;
FIGs. 15 to 18 are diagrams of screens for a process for controlling a screen, on which contents of a chat with counterpart terminals are displayed, according to a 7^{th} embodiment of the present invention;
FIG. 19 is a diagram of a screen for a process for controlling a screen, on which contents of a chat with counterpart terminals are displayed, according to an 8^{th} embodiment of the present invention;
FIG. 20 is a diagram of a screen for a process for controlling a screen, on which contents of a chat with counterpart terminals are displayed, according to a 9^{th} embodiment of the present invention;
FIG. 21 is a diagram of a screen for a process for controlling a screen, on which contents of a chat with counterpart terminals are displayed, according to a 10^{th} embodiment of the present invention; and
FIG. 22 is a diagram of a screen for a process for controlling a screen, on which contents of a chat with counterpart terminals are displayed, according to an 11^{th} embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

The terms "module," "unit," and "part" are used herein with respect to various elements only to facilitate disclosure of the invention. Therefore, the terms "module," "unit," and "part" are used interchangeably herein.

The present invention can be applied to various types of terminals. For example, the terminals can include mobile terminals as well as stationary terminals, such as mobile phones, user equipments, smart phones, digital televisions (DTVs), computers, digital broadcast terminals, personal digital assistants, portable multimedia players (PMP) and navigators.

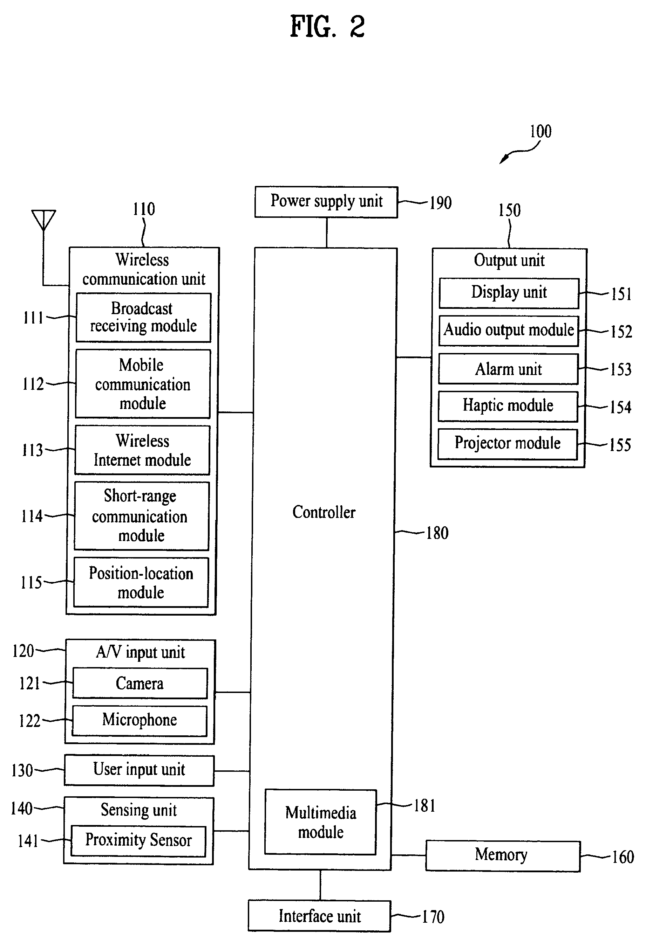

For ease of description, the present invention will be described with respect to a mobile terminal 100 shown in FIGS. 2 through 3B. However, it should be understood that the present invention can also be applied to other types of terminals.

FIG. 2 illustrates an exemplary block diagram of the mobile terminal 100 in accordance with one embodiment of the present invention. It should be understood that embodiments, configurations and arrangements other than that depicted in FIG. 2 can be used within the scope of the invention defined in the claims. As shown in FIG. 2, the mobile terminal 100 includes a wireless communication unit 110, an audio/video (AV) input unit 120, a user input unit 130, a sensing unit 140, an output unit 150, a memory 160, an interface unit 170, a controller 180, and a power supply unit 190. It should be understood that the mobile terminal 100 may include additional or fewer components than those shown in FIG. 2.

The wireless communication unit 110 can include one or more components for allowing wireless communication between the mobile terminal 100 and a wireless communication system or network within which the mobile terminal 100 is located. For example, the wireless communication unit 110 can include a broadcast receiving module 111, a mobile communication module 112, a wireless Internet module 113, a short-range communication module 114, and a position-location module 115.

The broadcast receiving module 111 receives a broadcast signal and/or broadcast related information from an external broadcast management server via a broadcast channel. In one embodiment, the mobile terminal 100 can be configured to include two or more broadcast receiving modules 111 to enable simultaneous reception of two or more broadcast channels or to facilitate switching of broadcast channels.

The broadcast channel can include a satellite channel and a terrestrial channel. The broadcast management server can be a server that generates and transmits a broadcast signal and/or broadcast related information, or a server that receives a previously-generated broadcasting signal and/or previously-generated broadcasting-related information and transmits the previously-generated broadcast signal and/or previously-generated broadcasting-related information to the mobile terminal 100.

For example, the broadcast signal can be implemented as a TV broadcast signal, a radio broadcast signal, a data broadcast signal, and various other types of signals. In one embodiment, the broadcast signal can include a combination of the broadcast signal and a TV broadcast signal or a combination of the broadcast signal and a radio broadcast signal.

The broadcast-related information can include broadcast channel information, broadcast program information, or broadcast service provider information. The broadcast-related information can be provided to the mobile terminal 100 through a mobile communication network. In such a case, the broadcast-related information can be received by the mobile communication module 112.

The broadcast-related information can be implemented in various forms. For example, the broadcast-related information can have the form of an electronic program guide (EPG) of the digital multimedia broadcasting (DMB) standard, or an electronic service guide (ESG) of the digital video broadcast-handheld (DVB-H) standard.

The broadcast receiving module 111 can be configured to receive broadcast signals transmitted from various types of broadcast systems, such as digital multimedia broadcasting-terrestrial (DMB-T), digital multimedia broadcasting-satellite (DMB-S), DVB-H, digital video broadcast - convergence of broadcast and mobile services (DVB-CBMS), Open Mobile Alliance broadcast (OMA-BCAST), the data broadcasting system known as media forward link only (MediaFLO®) and integrated services digital broadcast-terrestrial (ISDB-T) systems. The broadcast receiving module 111 can be configured to receive signals from broadcasting systems providing broadcasting signals other than the above-described digital broadcasting systems. The broadcast signal and/or broadcast-related information received via the broadcast receiving module 111 can be stored in a storage medium, such as the memory 160.

The mobile communication module 112 can transmit and/or receive wireless signals to and/or from at least one network entity, such as a base station, an external terminal, or a server. For example, such wireless signals can include audio, video, and data according to a transmission and reception of text/multimedia messages.

The wireless Internet module 113 can be a module that supports Internet access for the mobile terminal 100. For example, the wireless Internet module 113 can be included in the mobile terminal 100 or installed in an external device that is coupled to the mobile terminal 100. For example, the wireless Internet technology implemented by the wireless Internet module 113 can be a wireless local area network (WLAN), Wi-Fi, Wireless Broadband (WiBro™), World Interoperability for Microwave Access (WiMAX™), or High Speed Downlink Packet Access (HSDPA).

Moreover, as mentioned in the foregoing description, the wireless internet module 113 can receive or download the data relevant to the area, in which the mobile terminal 100 is located, from the external server.

The short-range communication module 114 can be a module for supporting relatively short-range communications. For example, the short-range communication module 114 can be configured to communicate using short range communication technology, such as, radio frequency identification (RFID), Infrared Data Association (IrDA), or Ultra-wideband (UWB), as well as networking technologies, such as Bluetooth™ or ZigBee™.

The position-location module 115 identifies or otherwise obtains the location of the mobile terminal 100. In one embodiment, the position-location module 115 can include a global positioning system (GPS) module.

The A/V input unit 120 can be used to input an audio signal or a video signal, and can include a camera 121 and a microphone 122. For example, the camera 121 can have a digital zoom feature and can process image frames of still images or video obtained by an image sensor of the camera 121 in a video call mode or a photographing mode. The processed image frames can be displayed on a display unit 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 can receive an external audio signal while operating in a particular mode, such as a phone call mode, a recording mode or a voice recognition mode, and can process the received audio signal into electrical audio data. The audio data can then be converted into a form that can be transmitted to a mobile communication base station through the mobile communication module 112 in the call mode. The microphone 122 can apply various noise removal or noise canceling algorithms for removing or reducing noise generated when the external audio signal is received.

The user input unit 130 can generate input data in response to user manipulation of a corresponding input device or devices, such as a keypad, a dome switch, a touchpad, a jog wheel, or a jog switch. In one embodiment, the touchpad can be configured as a static pressure or capacitance type.

The sensing unit 140 can sense a change of position of the mobile terminal 100 or a component of the mobile terminal 100, relative positioning of components of the mobile terminal 100, such as a display and keypad, whether a user touches the mobile terminal 100, an orientation of the mobile terminal 100, acceleration or deceleration of the mobile terminal 100, and a current state of the mobile terminal 100, such as an open or close state. The sensing unit 140 can also include a proximity sensor 141.

The sensing unit 140 can generate a sensing signal for controlling the operation of the mobile terminal 100 according to a detected status of the mobile terminal. For example, when the mobile terminal 100 is implemented as a slide type phone, the sensing unit 140 can sense whether the mobile terminal 100 is opened or closed. Further, the sensing unit 140 can sense whether the power supply 190 supplies power and whether the interface unit 170 is connected to an external device.

The output unit 150 can generate visual, auditory and/or tactile outputs and can include the display unit 151, an audio output module 152, an alarm unit 153, a haptic module 154, and a projector module 155. The display unit 151 can be configured to display information processed by the mobile terminal 100.

For example, when the mobile terminal 100 is in a call mode, the display unit 151 can display a user interface (UI) or a graphic user interface (GUI) for placing, conducting, and terminating a call. For example, when the mobile terminal 100 is in the video call mode or the photographing mode, the display unit 151 can additionally or alternatively display images which are associated with such modes, the Ul or the GUI.

The display unit 151 can be implemented using display technologies including, for example, a liquid crystal display (LCD), a thin film transistor-liquid crystal display (TFT-LCD), an organic light-emitting diode display (OLED), a flexible display and a three-dimensional display. The mobile terminal 100 can be configured to include more than one display unit 151 according to the configuration of the mobile terminal 100.

For example, the mobile terminal 100 can include a number of display units 151 that are arranged on a single face of the mobile terminal 100, and can be spaced apart from one another or integrated in one body. The number of display units 151 can also be arranged on different sides of the mobile terminal 100.

In one embodiment, the display used in the display unit 151 can be of a transparent type or a light transmittive type, such that the display unit 151 is implemented as a transparent display. For example, the transparent display can include a transparent OLED (TOLED) display. The rear structure of the display unit 151 can also be of a light transmittive type. Accordingly, a user may see an object located behind the body of the mobile terminal 100 through the transparent area of the body of the mobile terminal 100 that is occupied by the display unit 151.

When the display unit 151 and a sensor for sensing a user touch (hereinafter referred to as a "touch sensor") are configured as a layered structure to form a touch screen, the display unit 151 can be used as an input device in addition to an output device. For example, the touch sensor can be in the form of a touch film, a touch sheet, or a touch pad.

The touch sensor can convert a variation in pressure applied to a specific portion of the display unit 151 or a variation in capacitance generated at a specific portion of the display unit 151 into an electric input signal. The touch sensor can sense pressure resulting from a touch, as well as the position and area of the touch.

When the user applies a touch input to the touch sensor, a signal corresponding to the touch input can be transmitted to a touch controller (not shown). The touch controller can process the signal and transmit data corresponding to the processed signal to the controller 180. The controller 180 can then use the data to detect a touched portion of the display unit 151.

The proximity sensor 141 of the sensing unit 140 can be located in an internal region of the mobile terminal 100 and either enclosed by the touch screen or around the touch screen. The proximity sensor 141 can sense an object approaching a prescribed detecting surface or an object located near the proximity sensor 141 without any physical contact using an electromagnetic field or infrared rays. The longevity of the proximity sensor 141 can substantially exceed the longevity of a contact sensor and, therefore, can have wide applications in the mobile terminal 100.

The proximity sensor 141 can include a transmittive photo-electric sensor, a direct reflection photo-electric sensor, a mirror reflection photo-electric sensor, a radio frequency oscillation proximity sensor, an electrostatic capacity proximity sensor, a magnetic proximity sensor, and/or an infrared proximity sensor. In one embodiment, the touch screen can include an electrostatic capacity proximity sensor, such that a proximity of a pointer can be detected through a variation in an electric field according to the proximity of the pointer. Accordingly, the touch screen or touch sensor can be classified as the proximity sensor 141.

For purposes of clarity, an action of the pointer approaching the touch screen and being recognized without actually contacting the touch screen will be herein referred to as a "proximity touch," while an action of bringing the pointer into contact with the touch screen will be herein referred to as a "contact touch." A proximity touch position of the pointer on the touch screen can correspond to a position on the touch screen from which the pointer is situated perpendicularly with respect to the touch screen.

Via the proximity sensor 141, a proximity touch and a proximity touch pattern, such as a proximity touch distance, a proximity touch duration, a proximity touch position, or a proximity touch movement state can be detected. For example, information corresponding to the detected proximity touch action and proximity touch pattern can be displayed on the touch screen.

The audio output module 152 can output audio data received from the wireless communication unit 110, or stored in the memory 160, in a call receiving mode, a call placing mode, a recording mode, a voice recognition mode, or a broadcast receiving mode. The audio output module 152 can also provide audio signals related to particular functions performed by the mobile terminal 100, such as a call received or a message received. For example, the audio output module 152 can include a speaker, a buzzer, or other audio output device.

The alarm unit 153 can output a signal for indicating the occurrence of an event of the mobile terminal 100, such as a call received event, a message received event and a touch input received event, using a vibration as well as video or audio signals. The video or audio signals can also be output via the display unit 151 or the audio output module 152. Therefore, in various embodiments, the display unit 151 or the audio output module 152 can be considered as a part of the alarm unit 153.

The haptic module 154 can generate various tactile effects that can be physically sensed by the user. For example, a tactile effect generated by the haptic module 154 can include vibration. The intensity and/or pattern of the vibration generated by the haptic module 154 can be controlled. For example, different vibrations can be combined and provided or sequentially provided.

The haptic module 154 can generate a variety of tactile effects in addition to a vibration. Such tactile effects include an effect caused by an arrangement of vertically moving pins that are in contact with the skin of the user; an effect caused by a force of air passing through an injection hole or a suction of air through a suction hole; an effect caused by skimming over the user's skin; an effect caused by contact with an electrode; an effect caused by an electrostatic force; and an effect caused by the application of cold and warm temperatures using an endothermic or exothermic device.

For example, the haptic module 154 can enable a user to sense the tactile effects through a muscle sense of the user's finger or arm, as well as to transfer the tactile effect through direct contact. Optionally, the mobile terminal 100 can include at least two haptic modules 154 according to the configuration of the mobile terminal 100.

The projector module 155 is an element for performing an image projection function of the mobile terminal 100. In one embodiment, the projector module 155 can be configured to display an image identical to or partially different from an image displayed by the display unit 151 on an external screen or wall according to a control signal of the controller 180.

For example, the projector module 155 can include a light source (not shown), such as a laser, that generates adequate light for external projection of an image, means for producing the image (not shown) to be projected via the light generated from the light source, and a lens (not shown) for enlarging the projected image according to a predetermined focus distance. The projector module 155 can further include a device (not shown) for adjusting the direction in which the image is projected by mechanically moving the lens or the entire projector module 155.

The projector module 155 can be classified as a cathode ray tube (CRT) module, a liquid crystal display (LCD) module, or a digital light processing (DLP) module according to a type of display used. For example, the DLP module operates by enabling the light generated from the light source to reflect on a digital micro-mirror device (DMD) chip and can advantageously reduce the size of the projector module 155.

The projector module 155 can preferably be configured in a lengthwise direction along a side, front or back of the mobile terminal 100. It should be understood, however, that the projector module 155 can be configured on any portion of the mobile terminal 100.

The memory 160 can store various types of data to support the processing, control, and storage requirements of the mobile terminal 100. For example, such types of data can include program instructions for applications operated by the mobile terminal 100, contact data, phone book data, messages, audio, still images, and/or moving images.

A recent use history or a cumulative usage frequency of each type of data can be stored in the memory unit 160, such as usage frequency of each phonebook, message or multimedia. Moreover, data for various patterns of vibration and/or sound output when a touch input is performed on the touch screen can be stored in the memory unit 160.

The memory 160 can be implemented using any type or combination of suitable volatile and non-volatile memory or storage devices, such as a flash memory, a hard disk type memory, a multimedia card micro type memory, a card type memory, such as a Secure Digital (SD) card or Extreme Digital (xD) card, a random access memory (RAM), a static random access memory (SRAM), a read-only memory (ROM), an erasable programmable read-only memory (EPROM), a programmable ROM (PROM), an electrically erasable programmable read-only memory (EEPROM), a magnetic memory, a magnetic disk, an optical disk, or other type of memory or data storage device. In other embodiments, the memory 160 can be a storage device that can be accessed by the mobile terminal 100 via the Internet.

The interface unit 170 can couple the mobile terminal 100 to external devices. The interface unit 170 can receive data from the external devices or power, and transmit the data or power to internal components of the mobile terminal 100. In addition, the interface unit 170 can transmit data of the mobile terminal 100 to the external devices. The interface unit 170 can include, for example, a wired or wireless headset port, an external charger port, a wired or wireless data port, a memory card port, a port for connecting a device having an identity module, an audio input/output (I/O) port, a video I/O port, and/or an earphone port.

The identity module is the chip for storing various kinds of information for authenticating the authority to use the mobile terminal 100. For example, the identity module can be a user identify module (UIM), a subscriber identify module (SIM) or a universal subscriber identify module (USIM). A device including the identity module (hereinafter referred to as "identity device") can also be manufactured in the form of a smart card. Therefore, the identity device can be connected to the mobile terminal 100 via a corresponding port of the interface unit 170.

When the mobile terminal 100 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 can control the general operations of the mobile terminal 100. For example, the controller 180 can be configured to perform control and processing associated with voice calls, data communication, and/or video calls. The controller 180 can perform pattern recognition processing to recognize a character or image from a handwriting input or a picture-drawing input performed on the touch screen.

The power supply unit 190 can be an external power source, an internal power source, or a combination thereof. The power supply unit 190 can supply power to other components in the mobile terminal 100.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such embodiments may also be implemented by the controller 180.

For example, the procedures or functions described herein can be implemented in software using separate software modules that allow performance of at least one function or operation. Software codes can be implemented by a software application or program written in any suitable programming language. The software codes can be stored in the memory 160 and executed by the controller 180.

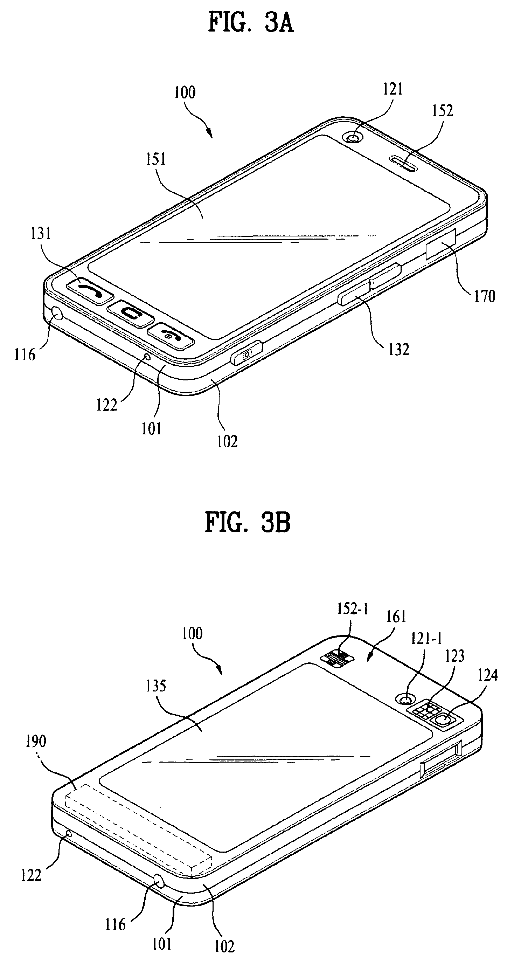

FIG. 3A is a front perspective view of the mobile terminal 100 in accordance with one embodiment of the present invention. In FIG. 3A, the mobile terminal 100 is shown to have a bar type terminal body.

However, it should be understood that the mobile terminal 100 is not limited to a bar type terminal body and can have various other body types. Examples of such body types include a slide type body, folder type body, swing type body, a rotational type body, or combinations thereof. Although the disclosure herein is primarily with respect to a bar-type mobile terminal 100, it should be understood that the disclosure can be applied to other types of mobile terminals.

As shown in FIG. 3A, the case of the mobile terminal 100 (otherwise referred to as a "casing," "housing," or "cover") forming the exterior of the mobile terminal 100 can include a front case 101 and a rear case 102. Various electronic components are installed in the space between the front case 101 and the rear case 102. One or more intermediate cases can be additionally disposed between the front case 101 and the rear case 102. For example, the front case 101 and the rear case 102 can be made by injection-molding of a synthetic resin or can be made using a metal, such as stainless steel (STS) or titanium (Ti).

The display unit 151, the audio output module 152, the camera 121, user input modules 130a and 130b, the microphone 122, or the interface unit 170 can be situated on the mobile terminal 100, and specifically, on the front case 101.

As shown in FIG. 3A, for example, the display unit 151 can be configured to occupy a substantial portion of the front face 156 of the front case 101. As also shown in FIG.3A, the audio output unit 152 and the camera 121 can be arranged in proximity to one end of the display unit 151, and the user input module 130a and the microphone 122 can be located in proximity to another end of the display unit 151. As further shown in FIG. 3A, the user input module 130b and the interface unit 170 are arranged on the sides of the front case 101 and the rear case 102, such as sides 158 and 159, respectively.

The user input unit 130 described previously with respect to FIG. 2 can be configured to receive a command for controlling an operation of the mobile terminal 100 and can include one or more user input modules 130a and 130b shown in FIG. 3A. The user input modules 130a and 130b can each be referred to as a "manipulation unit" and can be configured to employ various methods and techniques of tactile manipulation and response to facilitate operation by the user.

The user input modules 130a and 130b can be configured for inputting different commands relative to one another. For example, the user input module 130a can be configured allow a user to input such commands as "start," "end," and "scroll" to the mobile terminal 100. The user input module 130b can allow a user to input a command for adjusting the volume of the audio output unit 152 or a command for switching to a touch recognition mode of the display unit 151.

FIG. 3B is a rear perspective view of the mobile terminal 100 in accordance with one embodiment of the present invention. As shown in FIG. 3B, a camera 121-1 can be additionally located on a rear surface 161 of the rear case 102. The camera 121-1 has a direction of view that is substantially opposite to the direction of view of the camera 121 shown in FIG. 3A. The cameras 121 and 121-1 can have different resolutions, or different pixels counts, with respect to one another.

For example, the camera 121 can operate with a relatively lower resolution than the camera 121-1 in order to capture an image of the user to allow immediate transmission of the image to another user in real-time for a video call, whereas the camera 121-1 can operate with a relatively higher resolution than the camera 121 to capture images of general objects with high picture quality, which may not require immediate transmission in real-time, and may be stored for later viewing or use. For example, the cameras 121 and the camera 121-1 can be configured to rotate or to pop-up on the mobile terminal 100.

Additional camera related components, such as a flash 123 and a mirror 124, can be located adjacent to the camera 121-1. When an image of a subject is captured with the camera 121-1, the flash 123 illuminates the subject. The mirror 124 allows self-image capturing by allowing the user to see himself when the user desires to capture his own image using the camera 121-1.

The rear surface 161 of the rear case 102 can further include a second audio output module 152-1. The second audio output module 152-1 can support a stereo sound function in conjunction with the audio output module 152 shown in FIG. 3A and can be used for communication during a phone call when the mobile terminal 100 is in a speaker phone mode.

A broadcasting signal receiving antenna 116 can be additionally attached to the side of the body of the mobile terminal 100 in addition to an antenna used for telephone calls. The broadcasting signal receiving antenna 116 can form a part of the broadcast receiving module 111 shown in FIG. 2, and can be set in the body of the mobile terminal 100 such that the broadcasting signal receiving antenna can be pulled out and retracted into the body of the mobile terminal 100.

FIG. 3B shows the power supply unit 190 for providing power to the mobile terminal 100. For example, the power supply unit 190 can be situated either inside the mobile terminal 100 or detachably coupled to the mobile terminal 100.

As shown in FIG. 3B, a touch pad 135 for sensing a touch by the user can be located on the rear surface 161 of the rear case 102. In one embodiment, the touch pad 135 and the display unit 151 can be translucent such that the information displayed on display unit 151 can be output on both sides of the display unit 151 and can be viewed through the touch pad 135. The information displayed on the display unit 151 can be controlled by the touch pad 135. In another embodiment, a second display unit in addition to display unit 151 illustrated in FIG. 3A can be located on the rear surface 161 of the rear case 102 and combined with the touch pad 135 to form a touch screen on the rear case 102.

The touch pad 135 is activated by interconnecting with the display unit 151 of the front case 101. The touch pad 135 can be located in parallel with the display unit 151 and behind the display unit 151. The touch pad 135 can have the same or smaller size than the display unit 151.

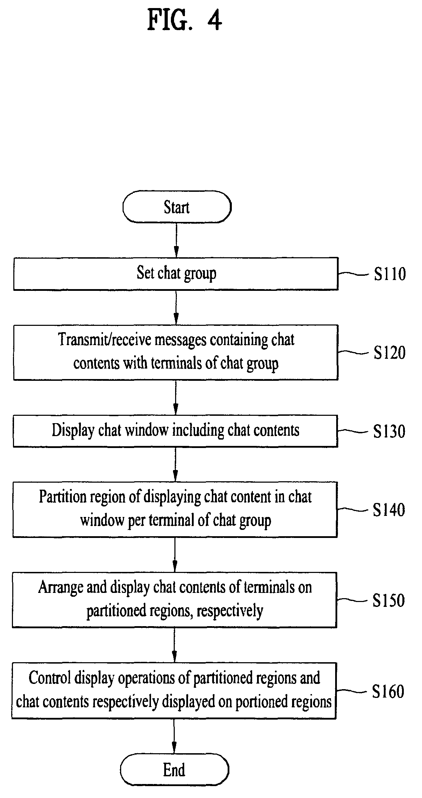

A process for partitioning a whole region of a chat content display screen per terminal belonging to a chat group, arranging and displaying chat contents of a corresponding terminal on the partitioned regions per time order of recent transmission/reception, respectively, and controlling display operations of the displayed regions and the corresponding chat contents according to the present invention is described in detail with reference to FIGs. 4 to 22 as follows.

FIG. 4 is a flowchart of a process for controlling a screen, on which contents of a chat with counterpart terminals are displayed, according to the present invention.

Referring to FIG. 4, the controller 180 of the mobile terminal 100 activates a messenger for a group chat with at least one or more counterpart terminals in accordance with a request made by a user and then displays a chat content display screen of the activated messenger on the touchscreen 151.

If the user sets a chat group including at least one or more counterpart terminals through the messenger [S110], the controller 180 transmits/receives messages containing chat contents to/from the counterpart terminals set for the chat group [S120] and then displays the chat contents contained in the transmitted/received messages on the chat content display screen of the messenger [S130].

In this case, the messenger, which is an application, may be provided as a default to the memory 160 of the mobile terminal 100 and may be installed by being downloaded from an external messenger providing server via the wireless communication unit 110.

The user may be able to set counterpart terminals, which will be registered with a chat group, via the messenger. In particular, if the user inputs a chat group setting command via the messenger, the controller 180 displays an input window for inputting contacts of the counterpart terminals to be registered with the chat group. If so, the user may be able to directly input the contact of the counterpart terminals, which will be registered with the chat group, via the input window. In this case, the contacts of the counterpart terminals can include a mobile phone number, an email address, a home phone number, a fax number and the like.

If the user inputs a chat group setting command via the messenger, the controller 180 searches for counterpart terminals previously having a chat with the user and then displays the found counterpart terminals as a list. Subsequently, the user selects counterpart terminals, which will be registered with the chat group, from the list and may be then able to set the chat group.

If the user inputs a chat group setting command via the messenger, the controller 180 displays a list of contact informations within a phonebook. Subsequently, the user selects contact informations corresponding to counterpart terminals, which will be registered with the chat group, from the list and may be then able to set the chat group. In this case, the contact informations in the phonebook may include all of the contact informations in the phonebook or contact informations available for a chat.

While the chat content display screen is displayed, if the user inputs a command for partitioning the chat content display screen per terminal in the chat group (user included) according to the present invention, the controller 180 partitions the whole region of the chat content display screen per terminal (user terminal included) belonging to the chat group [S140].

Subsequently, the controller 180 arranges and displays the chat contents of the corresponding terminal per recently transmitted/received time order on each of the partitioned regions [S150].

In this case, the partitioning command may include a touch of a preset type inputted by the user. For example, the touch may include a long touch for keeping a touched state for prescribed duration or a touch gesture having a pattern previously set by the user.

In particular, if the user inputs the long touch or the user-preset touch gesture to the chat content display screen, the controller 180 may perform the above-mentioned operations of the steps S140 and S150. In doing so, the controller 180 may provide a touch gesture setting menu to a configuration setting menu of the mobile terminal 100 or an option menu of the messenger. If the user selects the touch gesture setting menu, the controller 180 provides a touch gesture setting window. If the user inputs a touch gesture via the touch gesture setting menu, the controller 180 sets the inputted touch gesture as the partitioning command.

Meanwhile, irrespective of a presence or non-presence of an input of the partitioning command, when the chat content display screen is displayed, the controller 180 automatically partitions a whole region of the chat content display screen per terminal belonging to the chat group and may be then able to display the chat contents of the corresponding terminal on each of the partitioned regions in a manner of arranging the chat contents per recently transmitted/received time order.

Subsequently, in accordance with the partitioning command inputted by the user, the controller 180 controls display operations of the partitioned regions and the chat contents of the corresponding terminals displayed on the partitioned regions, respectively [S160].

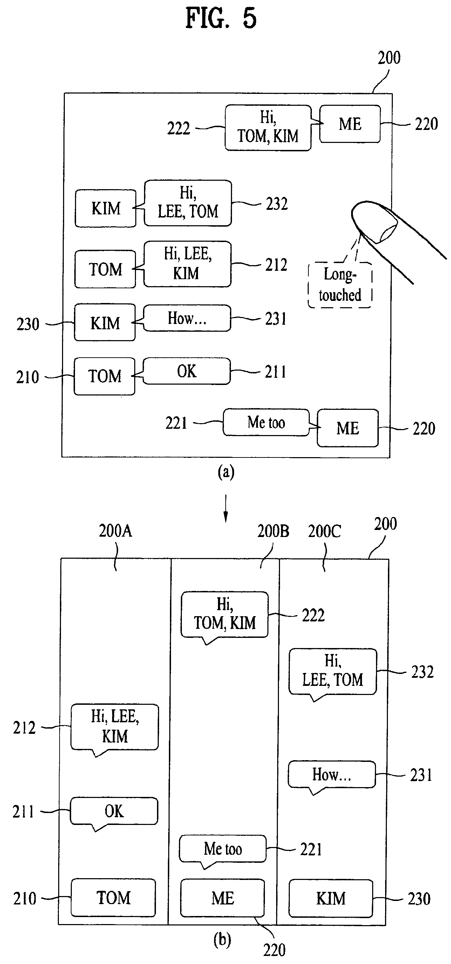

The process shown in FIG. 4 is described in detail with reference to FIGs. 5 to 22 as follows.

Prior to the description with reference to FIGs. 5 to 22, assume that 'ME' 220 shown in FIGs. 5 to 22 is a terminal 100 of a user belonging to a chat group, that 'TOM' 210 is a terminal of a 1^{st} counterpart belonging to the chat group, and that 'KIM' 230 is a terminal of a 2^{nd} counterpart belonging to the chat group.

1^{st} to 11^{th} embodiments described in the following description may be performed independently or in a manner of being combined with one another entirely or in part.

[1^{st} Embodiment] The features of said embodiment may form part of the claimed invention.

According to a 1^{st} embodiment of the present invention, the chat content display region in the steps S140 and S150 shown in FIG. 4 is partitioned into partitioned regions in a vertical direction with reference to a front side of the touchscreen 151. And, chat contents of corresponding terminals are displayed on the partitioned regions in a manner of being arranged in the vertical direction, respectively.

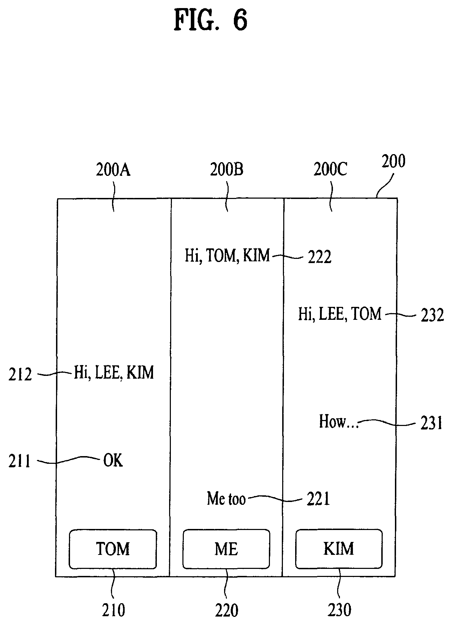

In the following description, the 1^{st} embodiment of the present invention is explained in detail with reference to FIG. 5 and FIG. 6.

FIG. 5 and FIG. 6 are diagrams of screens for a process for controlling a screen, on which contents of a chat with counterpart terminals are displayed, according to a 1^{st} embodiment of the present invention.

First of all, FIG. 5 (a) shows a chat content display screen 200 of the related art as shown in FIG. 1.

Referring to FIG. 5 (a), the controller 180 displays chat contents 211, 212, 221, 222, 231 and 232 between a user 220 and counterparts 210 and 230 belonging to a chat group in a manner of arranging the chat contents 211, 212, 221, 222, 231 and 232 in ascending or descending order per recent transmission/reception time.

Referring to FIG. 5 (a), according to the related art, the chat contents 221 and 222 of the user 220 belonging to the chat group are displayed in a manner of being separately arranged on a right part (or a left part) and the chat contents 211, 212, 221, 222, 231 and 232 with the counterparts 210 and 230 are displayed in a manner of being arranged on the left part (or the right part).

In doing so, if the controller 180 detects that the user's partitioning command described with reference to FIG. 4 is inputted [FIG. 5 (a)], the controller 180 partitions a region of the chat content display screen 200 into 1^{st} to 3^{rd} regions 200A, 200B and 200C corresponding to the members of the chat group in a vertical direction, respectively [FIG. 5 (b), FIG. 6].

Subsequently, the controller 180 displays the chat contents 211 and 212 of a 1^{st} counterpart (TOM) 210 on the 1^{st} region 200A in a manner of arranging the chat contents 211 and 212 in the vertical direction based on a time line with reference to a horizontal reference, displays the chat contents 221 and 222 of the user (ME) 220 in a manner of arranging the chat contents 221 and 222 on the second region 200B, and displays the chat contents 231 and 232 of a 2^{nd} counterpart (KIM) 230 in a manner of arranging the chat contents 231 and 232 on the 3^{rd} region 200C.

In doing so, FIG. 5 (a) shows that a long touch (i.e., one type of the partitioning command made by the user) of the user is inputted to the chat content display screen 200.

Moreover, the controller 180 may be able to display icons indicating the corresponding chat members 210,220 and 230 on the 1^{st} to 3^{rd} regions 200A, 200B and 200C, respectively.

In doing so, shapes of the icons may be displayed as such informations indicating the corresponding chat members 210, 220 and 230 as names of the corresponding counterparts 210, 220 and 230, images, emoticons and the like, respectively. And, each of the chat members 210, 220 and 230 may be able to set the shape of the icon via the messenger.

Meanwhile, referring to FIG. 5 (b), the controller 180 may be able to display the chat contents 211, 212, 221, 222, 231 and 232, which are arranged and displayed on the 1^{st} to 3^{rd} regions 200A, 200B and 200C, as word balloons, respectively [FIG. 5 (b)]. Alternatively, the controller 180 may be able to display the chat contents 211, 212, 221, 222, 231 and 232, which are arranged and displayed on the 1^{st} to 3^{rd} regions 200A, 200B and 200C, as lists, respectively [FIG. 6].

Besides, in accordance with a user's setting, the controller 180 may be able to display the chat contents 211, 212, 221, 222, 231 and 232, which are arranged and displayed on the 1^{st} to 3^{rd} regions 200A, 200B and 200C, as scrolls proceeding automatically in the vertical direction, respectively [not shown in FIG. 5 (b) or FIG. 6].

In this case, the controller 180 may provide the option menu of the messenger with a menu for setting a display scheme of the chat contents. And, the user may be able to set a display scheme desired by a user through the display scheme setting menu.

### [2^{nd} Embodiment]

According to a 2^{nd} embodiment of the present invention, the chat content display region in the steps S140 and S150 shown in FIG. 4 is partitioned into partitioned regions in a horizontal direction with reference to a front side of the touchscreen 151. And, chat contents of corresponding terminals are displayed on the partitioned regions in a manner of being arranged in the horizontal direction, respectively.

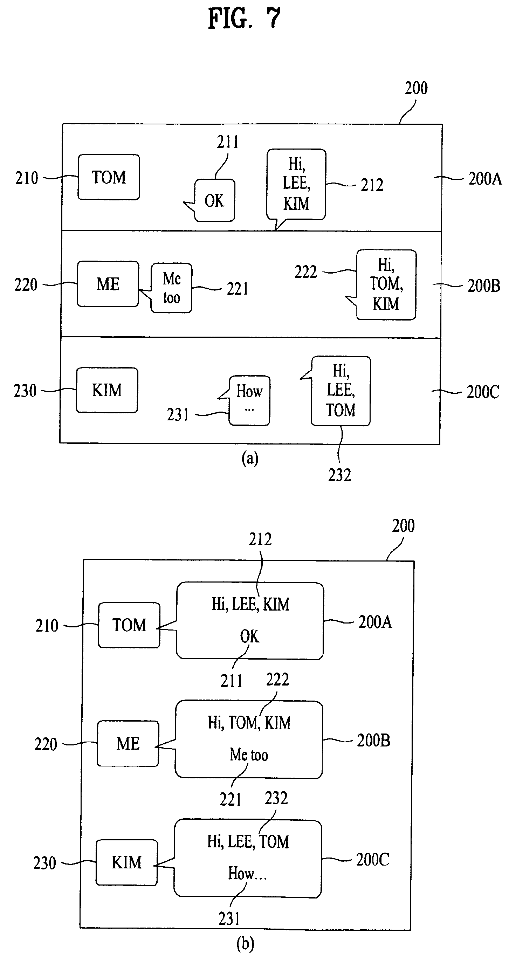

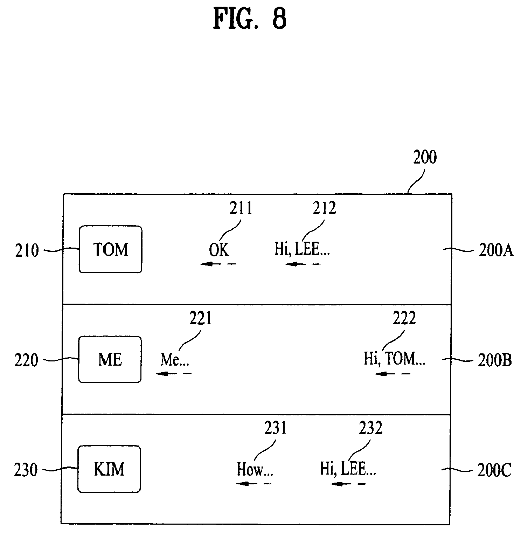

In the following description, the 2^{nd} embodiment of the present invention is explained in detail with reference to FIG. 7 and FIG. 8.

FIG. 7 and FIG. 8 are diagrams of screens for a process for controlling a screen, on which contents of a chat with counterpart terminals are displayed, according to a 2^{nd} embodiment of the present invention.

Referring to FIG. 7 and FIG. 8, if the controller 180 detects that the user's partitioning command described with reference to FIG. 4 is inputted, the controller 180 partitions a region of the chat content display screen 200 into 1^{st} to 3^{rd} regions 200A, 200B and 200C corresponding to the members of the chat group in a horizontal direction, respectively.

Subsequently, the controller 180 displays the chat contents 211 and 212 of a 1^{st} counterpart (TOM) 210 on the 1^{st} region 200A in a manner of arranging the chat contents 211 and 212 in the horizontal direction based on a time line with reference to a vertical reference, displays the chat contents 221 and 222 of the user (ME) 220 in a manner of arranging the chat contents 221 and 222 on the second region 200B, and displays the chat contents 231 and 232 of a 2^{nd} counterpart (KIM) 230 in a manner of arranging the chat contents 231 and 232 on the 3^{rd} region 200C.

In doing so, referring to FIG. 7 (a), the controller 180 may be able to display the chat contents 211, 212, 221, 222, 231 and 232, which are arranged and displayed on the 1^{st} to 3^{rd} regions 200A, 200B and 200C, as word balloons, respectively.

Moreover, the controller 180 partitions the region of the chat content display screen 200 into 1^{st} to 3^{rd} regions 200A, 200B and 200C corresponding to the members of the chat group in the vertical direction as word balloons, respectively.

Subsequently, the controller 180 arranges and displays the chat contents of the 1^{st} counterpart (TOM) 210 on the 1^{st} word balloon 200A. The controller 180 arranges and displays the chat contents 221 and 222 of the user (ME) 220 on the 2^{nd} word balloon 200B. And, the controller 180 arranges the chat contents 231 and 232 of the 2^{nd} counterpart (KIM) 230 on the 3^{rd} word balloon 200C.

Alternatively, the controller 180 may be able to display the chat contents 211, 212, 221, 222, 231 and 232, which are arranged and displayed on the 1^{st} to 3^{rd} regions 200A, 200B and 200C, as scrolls proceeding automatically in the horizontal direction, respectively [FIG. 8].

In this case, the controller 180 may provide the option menu of the messenger with a menu for setting a display scheme of the chat contents. And, the user may be able to set a display scheme desired by a user through the display scheme setting menu.

### [3^{rd} Embodiment]

According to a 3^{rd} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, if it is detected that a specific chat member is inputting a chat content, it may be able to display information indicating that the chat content is being inputted.

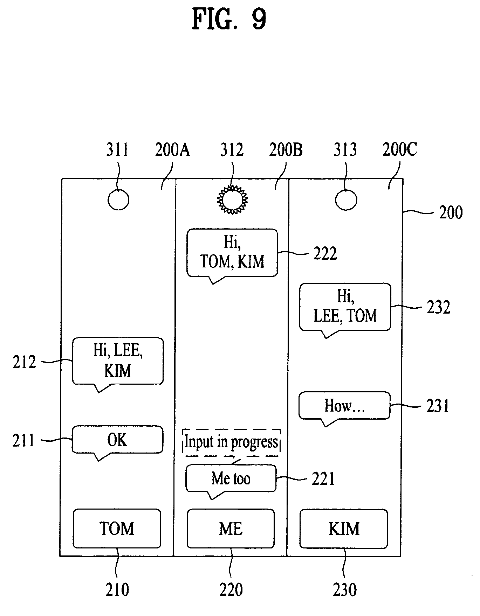

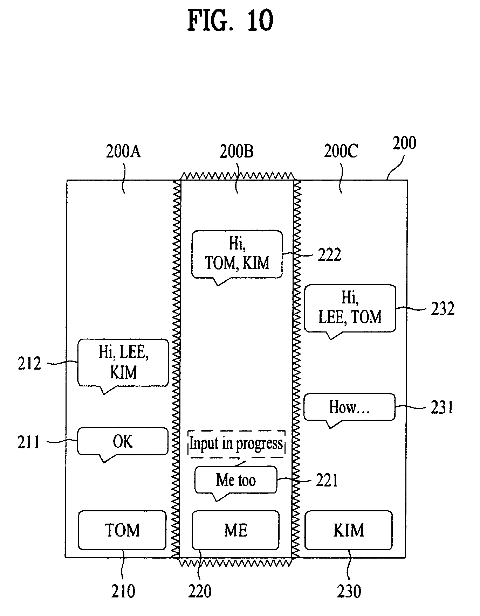

In the following description, the 3^{rd} embodiment of the present invention is explained in detail with reference to FIG. 9 and FIG. 10.

FIG. 9 and FIG. 10 are diagrams of screens for a process for controlling a screen, on which contents of a chat with counterpart terminals are displayed, according to a 3^{rd} embodiment of the present invention.

Referring to FIG. 9, the controller 180 arranges and displays the corresponding chat contents 211, 212, 221, 222, 231 and 232 on the regions 200A, 200B and 200C partitioned by the steps S140 and S150 mentioned in the foregoing description, respectively. And, the controller 180 displays icons 311, 312 and 313 indicating the corresponding chat members 210, 220 and 230 on the regions 200A, 200B and 200C, respectively.

If the controller 180 detects the chat member who is inputting a current chat content among the chat members including a user, the controller 180 identifiably displays the icon corresponding to the detected chat member in a manner of being discriminated from other icons, thereby informing the user that the detected chat member is inputting the current chat content.

In particular, if a chat content is inputted via a keypad (not shown in the drawing) displayed on the touchscreen 151, the controller 180 identifiably displays the icon 312 corresponding to the user, as shown in FIG. 9, in a manner that the icon 312 is discriminated from the rest of the icons 311 and 313.

In doing so, the controller 180 may be able to identifiably display the icon 312 corresponding to the user in a manner that the icon 312 is discriminated from the rest of the icons 311 and 313 by blinking, as shown in FIG. 9. Alternatively, the controller 180 may be able to identifiably display the icon 312 corresponding to the user in a manner that a display size, a display color, a font style and/or the like of the icon 312 is differentiated from those of the rest of the icons 311 and 313. Alternatively, the controller 180 may be able to identifiably display the icon 312 corresponding to the user in a manner that the icon 312 is discriminated from the rest of the icons 311 and 313 by generating vibration and sound from the region 200B corresponding to the user.

If a signal, which indicates an ongoing state of a chat content input, is received from the 1^{st} counterpart (TOM) 210 or the 2^{nd} counterpart (KIM) 230 via the wireless communication unit 110, the controller 180 may be able to identifiably display the icon 311 corresponding to the 1^{st} counterpart (TOM) 210 or the icon 313 corresponding to the 2^{nd} counterpart (KIM) 230 to be discriminated from other icons.

Referring to FIG. 10, while the controller 180 arranges and displays the corresponding chat contents 211, 212, 221, 222, 231 and 232 on the regions 200A, 200B and 200C partitioned by the steps S140 and S150 mentioned in the foregoing description, respectively, if the controller 180 detects a chat member, who is inputting a current chat content, among chat members including a user, the controller 180 displays the region corresponding to the detected chat member to be discriminated from other regions, thereby informing the user that the detected chat member is inputting the current chat content.

In particular, if a chat content is inputted via a keypad (not shown in the drawing) displayed on the touchscreen 151, the controller 180 identifiably displays the region 200B corresponding to the user, as shown in FIG. 10, in a manner that the region 200B is discriminated from the rest of the regions 200A and 200C.

In doing so, the controller 180 may be able to identifiably display the region 200B corresponding to the user in a manner that the region 200B is discriminated from the rest of the regions 200A and 200C by blinking, as shown in FIG. 10. Alternatively, the controller 180 may be able to identifiably display the region 200B corresponding to the user in a manner that a display size, a display color, a font style and/or the like of the region 200B is differentiated from those of the rest of the regions 200A and 200C.

If a signal, which indicates an ongoing state of a chat content input, is received from the 1^{st} counterpart (TOM) 210 or the 2^{nd} counterpart (KIM) 230 via the wireless communication unit 110, the controller 180 may be able to identifiably display the region 200A corresponding to the 1^{st} counterpart (TOM) 210 or the region 200C corresponding to the 2^{nd} counterpart (KIM) 230 to be discriminated from other regions.

### [4^{th} Embodiment]

According to a 4^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, display operations of the chat contents 211, 212, 221, 222, 231 and 232 are controlled in a manner that a corresponding ranking for recent transmission/reception time order is identified.

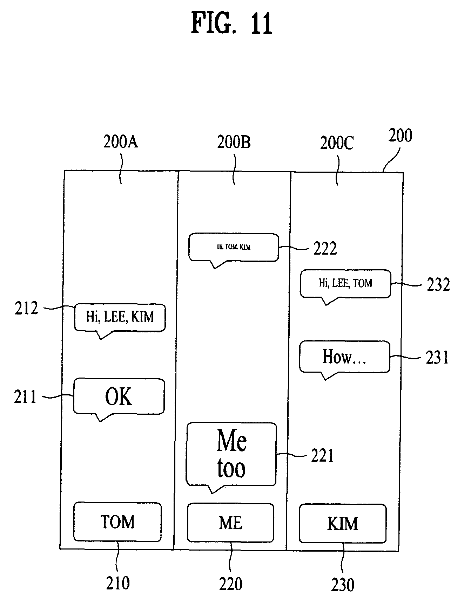

In the following description, the 4^{th} embodiment of the present invention is explained in detail with reference to FIG. 11.

FIG. 11 is a diagram of a screen for a process for controlling a screen, on which contents of a chat with counterpart terminals are displayed, according to a 4^{th} embodiment of the present invention.

Referring to FIG. 11, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, the controller 180 differentiates fonts styles, colors, display sizes, transparencies, brightness and the like of the chat contents 211, 212, 221, 222, 231 and 232 in accordance with recent transmission/reception time orders of the chat contents 211, 212, 221, 222, 231 and 232, thereby informing a user of the ranking for recent transmission/reception times of the chat contents 211, 212, 221, 222, 231 and 232.

For instance, referring to FIG. 11, the controller 180 may enlarge the font style of the most recently transmitted/received chat content 221 to the maximum size among the chat contents 211, 212, 221, 222, 231 and 232 and may gradually reduce the font styles of the rest of the chat contents in order from the chat content 211 corresponding to a next ranking to the chat content 222 corresponding to a lowest ranking.

For instance (not shown in FIG. 11), the controller 180 may raise the transparency of the most recently transmitted/received chat content 221 to the maximum level among the chat contents 211, 212, 221, 222, 231 and 232 and may gradually lower the transparencies of the rest of the chat contents in order from the chat content 211 corresponding to a next ranking to the chat content 222 corresponding to a lowest ranking.

### [5^{th} Embodiment]

According to a 5^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, a specific chat content or a specific region is displayed in a manner of being enlarged.

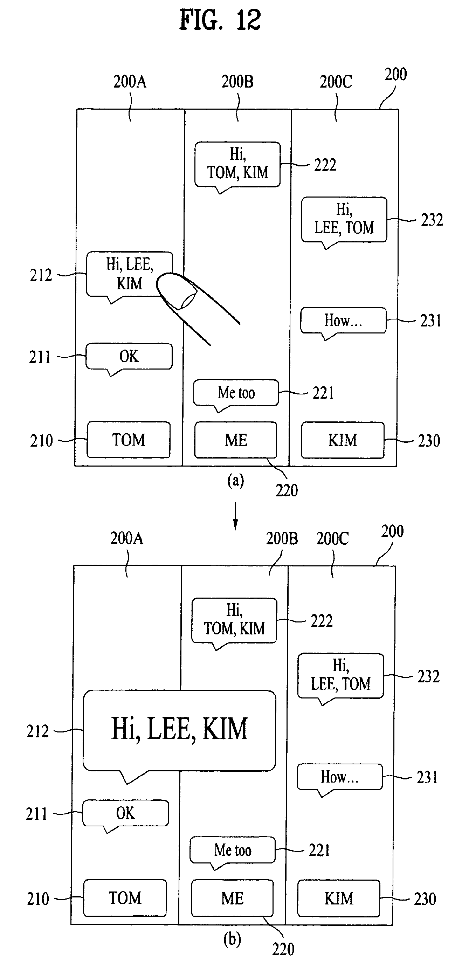

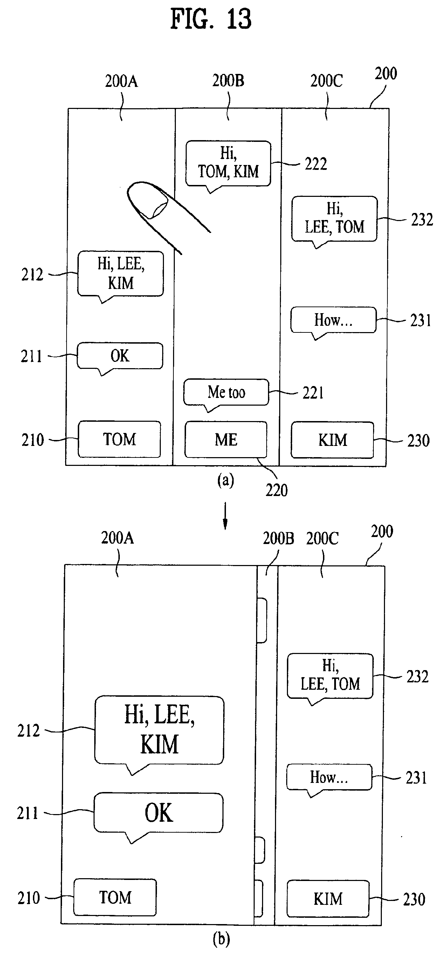

In the following description, the 5^{th} embodiment of the present invention is explained in detail with reference to FIG. 12 and FIG. 13.

FIG. 12 and FIG. 13 are diagrams of screens for a process for controlling a screen, on which contents of a chat with counterpart terminals are displayed, according to a 5^{th} embodiment of the present invention.

Referring to FIG. 12, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, if a specific chat content 212 is selected from the chat content display screen 200 [FIG. 12 (a)], in order for a user to view the selected chat content 212 conveniently, the controller 180 may display the selected chat content 212 in a manner of enlarging the selected chat content 212 to a preset size [FIG. 12 (b)].

If a pinching-out multi-touch is inputted to the specific chat content 212, the controller 180 may be able to display the specific chat content 212 in a manner of enlarging the specific chat content 212 gradually in accordance with the pinching-out multi-touch [not shown in FIG. 12].

In this case, the pinching-out multi-touch may mean a touch performed in a following manner. First of all, 1^{st} and 2^{nd} specific points of the specific chat content 212 are multi-touched. Secondly, while the multi-touch is maintained, a distance between the 1^{st} and 2^{nd} specific points may increase gradually. And, the controller 180 may display the specific chat content in a manner of enlarging the specific chat content 212 in proportion to the increasing amount of the distance between the 1^{st} and 2^{nd} specific points.

If a pinching-in multi-touch is inputted to the enlarged chat content 212, the controller 180 may be able to display the chat content 212 in a manner of reducing the chat content 212 gradually in accordance with the pinching-in multi-touch [not shown in FIG. 12].

In this case, the pinching-in multi-touch may mean a touch performed in a following manner. First of all, 1^{st} and 2^{nd} specific points of the chat content 212 are multi-touched. Secondly, while the multi-touch is maintained, a distance between the 1^{st} and 2^{nd} specific points may decrease gradually. And, the controller 180 may display the chat content in a manner of reducing the chat content 212 in proportion to the decreasing amount of the distance between the 1^{st} and 2^{nd} specific points.

Meanwhile, if a specific region 200A is selected from the chat content display screen 200 [FIG. 13 (a)], in order for a user to view the selected chat content 211 and the chat content 212 conveniently, the controller 180 may display the selected chat contents 211 and 212 in a manner of enlarging the selected region 200A and the selected chat contents 211 and 212 respectively included in the selected regions 200A to preset sizes, respectively [FIG. 13 (b)].

If a pinching-out multi-touch is inputted to the specific region 200A, the controller 180 may be able to display the specific region 200A and the chat contents 211 and 212 in a manner of enlarging the specific region 200A and the chat contents 211 and 212 gradually in accordance with the pinching-out multi-touch [not shown in FIG. 13].

If a pinching-in multi-touch is inputted to the enlarged specific region 200A, the controller 180 may be able to display the specific region 200A and the chat contents 211 and 212 in a manner of reducing the specific region 200A and the chat contents 211 and 212 gradually in accordance with the pinching-in multi-touch [not shown in FIG. 13].

### [6^{th} Embodiment]

According to a 6^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, a scroll function is provided for the corresponding regions 200A, 200B and 200C.

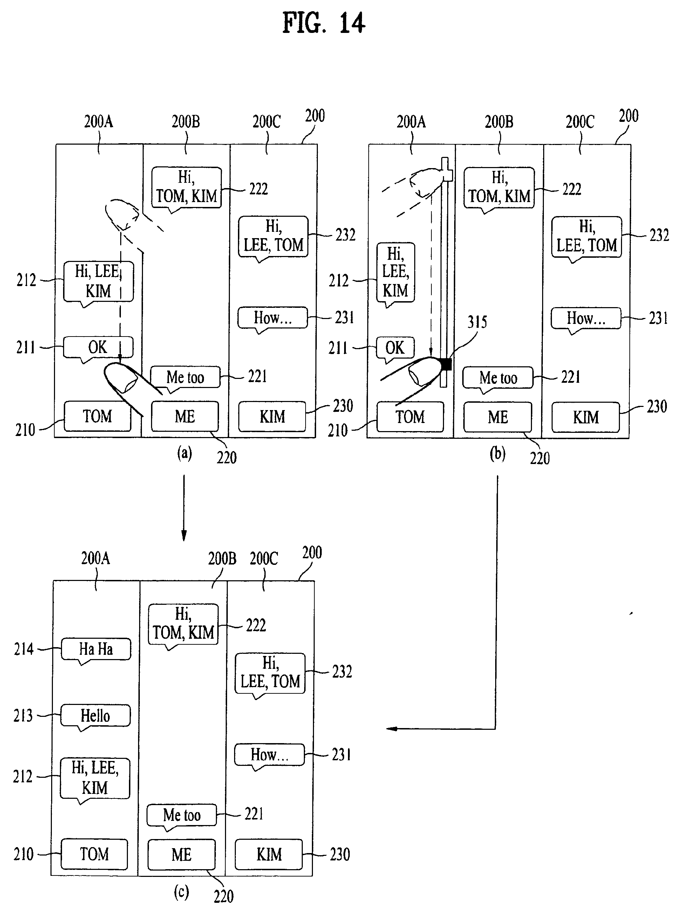

In the following description, the 6^{th} embodiment of the present invention is explained in detail with reference to FIG. 14.

FIG. 14 is a diagram of a screen for a process for controlling a screen, on which contents of a chat with counterpart terminals are displayed, according to a 6^{th} embodiment of the present invention.

Referring to FIG. 14, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, since there are too many chat contents corresponding to each of the regions 200A, 200B and 200C, if it is impossible to display the chat contents within one screen, the controller 180 may preferentially display the recently transmitted/received chat contents 211, 212, 221, 222, 231 and 232.

If a touch gesture (e.g., a flicking, a drag, etc.) for a scroll in a specific direction is inputted to the specific region 200A, the controller 180 scrolls the specific region 200A in the specific direction in accordance with the inputted touch gesture and displays new chat contents 213 [FIG. 14 (a)] and 214 corresponding to an amount of the scroll [FIG. 14 (c)].

Moreover, if the specific region 200A is touched, the controller 180 displays a scroll bar 315 for a scroll of the specific region 200A. If the scroll bar 315 is shifted in accordance with a user's touch, the controller 180 scrolls the specific region 200A in accordance with an amount of the shift of the shifted scroll bar 315 [FIG. 14 (b)] and displays new chat contents 213 and 214 corresponding to the scrolled amount [FIG. 14(c)].

[7^{th} Embodiment] The features of said embodiment may form part of the claimed invention.

According to a 7^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, an editing menu function for a specific chat content or a specific region is provided.

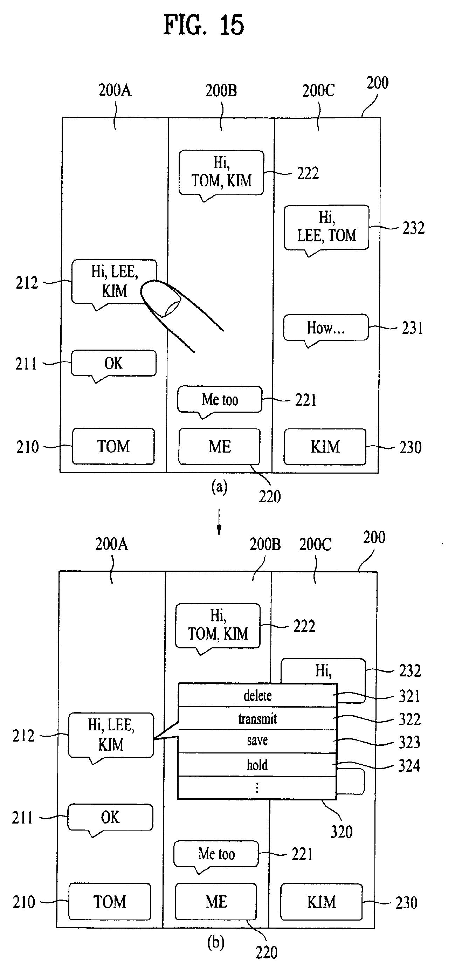

In the following description, the 7^{th} embodiment of the present invention is explained in detail with reference to FIGs. 15 to 18.

FIGs. 15 to 18 are diagrams of screens for a process for controlling a screen, on which contents of a chat with counterpart terminals are displayed, according to a 7^{th} embodiment of the present invention.

Referring to FIG. 15, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, if a specific chat content 212 is selected from the chat content display screen 200 [FIG. 15 (a)], the controller 180 may display an editing menu list 320 for the selected chat content 212.

In this case, the editing menu list 320 may include a deleting menu 321, a transmitting menu 322, a saving menu 323 and a holding menu 324, by which the editing menu function of the present invention may be non-limited. And, the editing menu function of the present invention may include every function capable of editing the chat content 212.

As a command for a paging of the editing menu list 320, a user's long-touch input to the chat content 212 or an input of a touch gesture having a pattern previously set by a user may be usable.

In this case, the controller 180 may provide a touch gesture setting menu used for the paging command for the editing menu list 320 to the configuration setting menu of the mobile terminal 100 or the option menu of the messenger. If a user selects the touch gesture setting menu, the controller 180 may provide a touch gesture setting window. If a user's touch gesture is inputted via the setting window, the controller 180 may set the inputted touch gesture as the paging command for the editing menu list 320.

If the deleting menu 321 is selected from the editing menu list 320, the controller 180 may delete the chat content 212 from the corresponding region 200A.

If the transmitting menu 322 is selected from the editing menu list 320, the controller 180 may display a contact input window. If a specific contact is inputted to the input window, the controller 180 may transmit the chat content 212 to the inputted contact via the wireless communication unit 110.

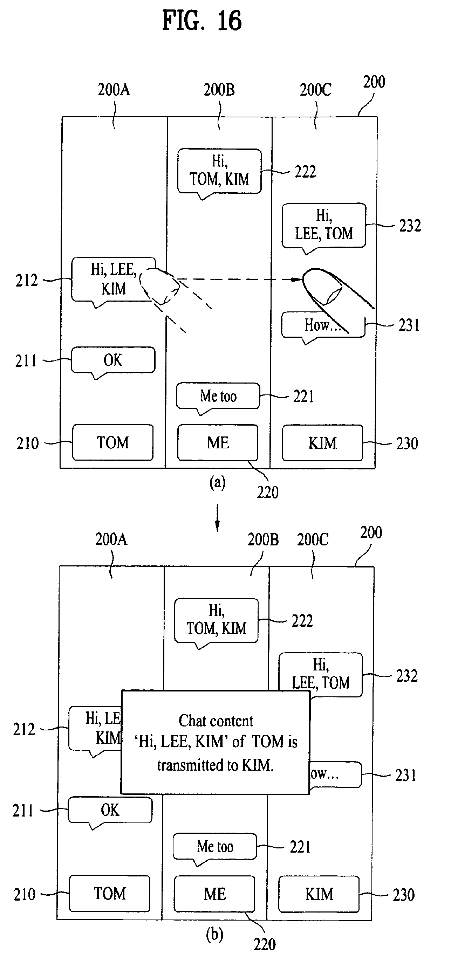

Meanwhile, referring to FIG. 16, after the transmitting menu 322 has been selected, if the chat content 212 in the first region 200A is dragged & dropped to the 3^{rd} region 200C [FIG. 16 (a)], the controller 180 may transmit the chat content 212 to a terminal of the 2^{nd} counterpart (KIM) 230 corresponding to the 3^{rd} region 200C via the wireless communication unit 110 [FIG. 16 (b)].

If the saving menu 323 is selected from the editing menu list 320, the controller 180 may save the chat content 212 in the memory 160. In doing so, the controller 180 may save the chat content 212 as an image file in the memory 160 in a manner of cropping or capturing the chat content 212 from the chat content display screen 200. Alternatively, the controller 180 recognizes a text corresponding to the chat content 212 and may be then able to save the recognized text as a file in the memory 160. Moreover, the controller 180 may enable a name of the 1^{st} counterpart (TOM) 210 corresponding to the chat content 212 to be included in a file name of the chat content 212. Alternatively, the controller 180 may enable a name of the 1^{st} counterpart (TOM) 210 and a potion (e.g., "Hi ...") of the chat content 212 to be included in the file name of the chat content 212.

If the holding menu 324 is selected from the editing menu list 320, the controller 180 may hold the chat content 212 in the chat content display screen 200. In particular, even if the chat contents in the chat content display screen 200 are changed, the chat content 212 may keep being displayed.

Although FIG. 15 or FIG. 16 shows that the corresponding chat content 212 is edited via the editing menu list 320, it may be able to individually activate the editing menu functions 321 to 324 in the editing menu list 320. In particular, if the chat content 212 is selected, the controller 180 may execute one of the deleting menu 321, the transmitting menu 322, the saving menu 323 and the holding menu 324 without displaying the editing menu list 320.

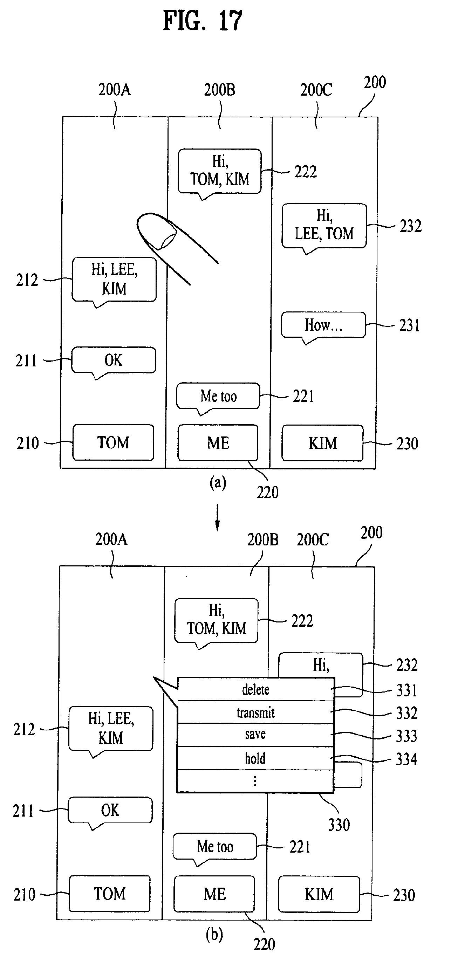

Referring to FIG. 17, if a 1^{st} region 200A is specifically selected from the chat content display screen 200 [FIG. 17 (a)], the controller 180 may display an editing menu list 330 for the 1^{st} region 200A.

In this case, the editing menu list 330 may include a deleting menu 331, a transmitting menu 332, a saving menu 333 and a withdrawing menu 334, by which the editing menu function of the present invention may be non-limited. And, the editing menu function of the present invention may include every function capable of editing the 1^{st} region 200A.

As a command for a paging of the editing menu list 330, a user's long-touch input to the 1^{st} region 200A or an input of a touch gesture having a pattern previously set by a user may be usable.

If the deleting menu 331 is selected from the editing menu list 330, the controller 180 deletes the 1^{st} region 200A from the chat content display screen 200, partitions the chat content display screen 200 into a 2^{nd} region 200B and a 3^{rd} region 200C, and then displays the corresponding chat contents on the 2^{nd} and 3^{rd} regions 200B and 200C by arranging them thereon.

If the transmitting menu 332 is selected from the editing menu list 330, the controller 180 may display a contact input window. If a specific contact is inputted to the input window, the controller 180 may transmit the chat contents 211 and 212 included in the 1^{st} region 200A to the inputted contact via the wireless communication unit 110.

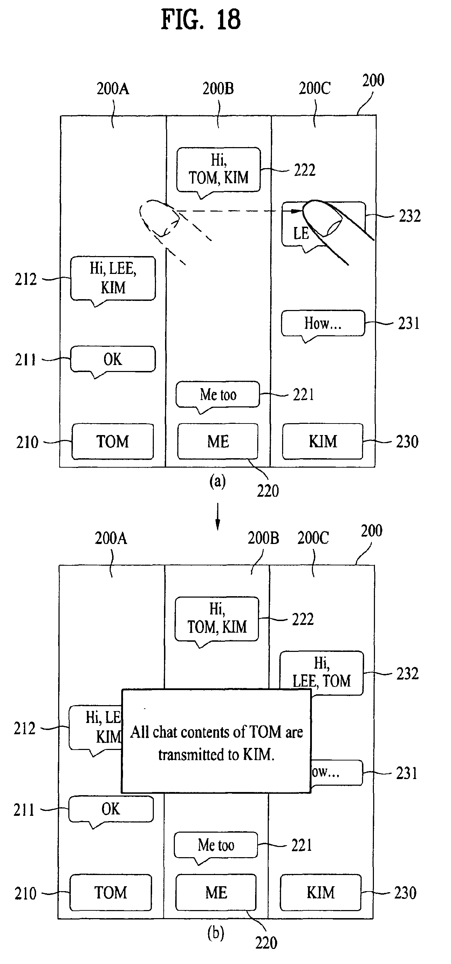

Meanwhile, referring to FIG. 18, after the transmitting menu 332 has been selected, if the 1^{st} region 200A is dragged & dropped to the 3^{rd} region 200C [FIG. 18 (a)], the controller 180 may transmit the chat contents 211 and 212 included in the 1^{st} region 200A to a terminal of the 2^{nd} counterpart (KIM) 230 corresponding to the 3^{rd} region 200C via the wireless communication unit 110 [FIG. 18 (b)].

If the saving menu 333 is selected from the editing menu list 330, the controller 180 may save the chat contents 211 and 212 included in the 1^{st} region 200A in the memory 160. In doing so, the controller 180 may compress the chat contents 211 and 212 included in the 1^{st} region 200A into one file and may then set a name of the compressed file to a name of the 1^{st} counterpart (TOM) 210 corresponding to the 1^{st} region 200A.

Moreover, the controller 180 may save the chat contents 211 and 212 in the 1^{st} region 200A as an image file in the memory 160 in a manner of cropping or capturing the chat contents 211 and 212. Alternatively, the controller 180 recognizes a text corresponding to the chat contents 211 and 212 and may be then able to save the recognized text as a file in the memory 160.

If the withdrawing menu 334 is selected from the editing menu list 220, the controller 180 withdraws the 1^{st} counterpart (TOM) 210 corresponding to the 1^{st} region 200A from the chat group and may delete the 1^{st} region 200A.

Although FIG. 17 or FIG. 18 shows that the corresponding chat contents 211 and 212 in the 1^{st} region 200A are edited via the editing menu list 330, it may be able to individually activate the editing menu functions 331 to 334 in the editing menu list 330. In particular, if the 1^{st} region 200A is selected, the controller 180 may execute one of the deleting menu 331, the transmitting menu 332, the saving menu 333 and the withdrawing menu 334 without displaying the editing menu list 330.

### [8^{th} Embodiment]

According to an 8^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, a multi-selection function of chat contents in a specific region is provided.

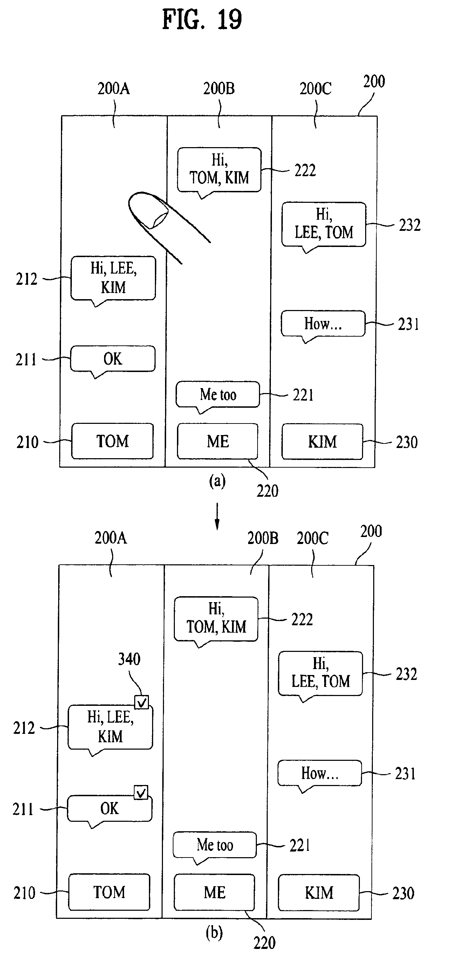

In the following description, the 8^{th} embodiment of the present invention is explained in detail with reference to FIG. 19.

FIG. 19 is a diagram of a screen for a process for controlling a screen, on which contents of a chat with counterpart terminals are displayed, according to an 8^{th} embodiment of the present invention.

Referring to FIG. 19, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, if a specific 1^{st} region 200A is selected from the chat content display screen 200 [FIG. 19 (a)], the controller 180 displays a check box 340 on each of the chat contents 211 and 212 to multiply select the chat contents 21 and 212 within the selected 1^{st} region 200A. If so, a user may be able to multiply select at least one of the chat contents 211 and 212 by selecting the check box 340 [FIG. 19 (b)].

In this case, as a command for a paging of the check box 340, a user's long-touch input to the 1^{st} region 200A or an input of a touch gesture having a pattern previously set by a user may be usable.

In doing so, the controller 180 may provide a touch gesture setting menu used for the paging command for the check box 340 to the configuration setting menu of the mobile terminal 100 or the option menu of the messenger. If a user selects the touch gesture setting menu, the controller 180 may provide a touch gesture setting window. If a user's touch gesture is inputted via the setting window, the controller 180 may set the inputted touch gesture as the paging command for the check box 340.

### [9^{th} Embodiment]

According to a 9^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, if a chat content display screen 200 is dragged or flicked, a keypad for a chat content input is displayed on the chat content display screen 200.

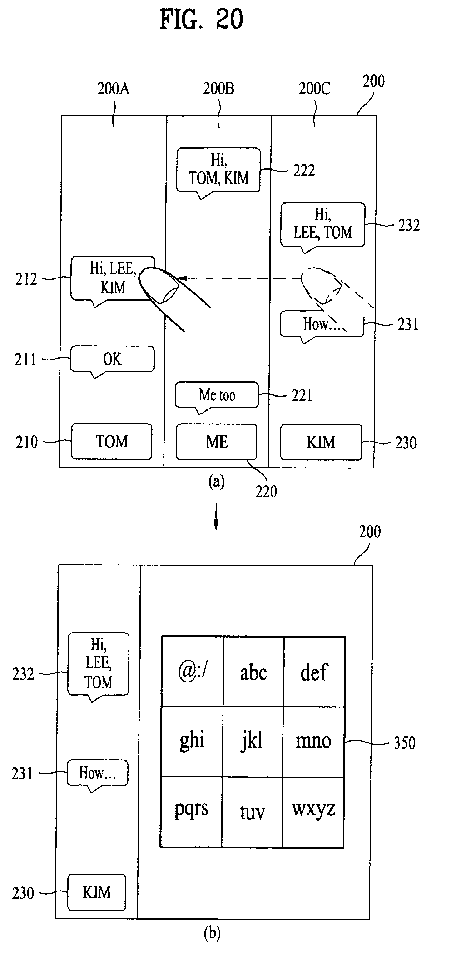

In the following description, the 9^{th} embodiment of the present invention is explained in detail with reference to FIG. 20.

FIG. 20 is a diagram of a screen for a process for controlling a screen, on which contents of a chat with counterpart terminals are displayed, according to a 9^{th} embodiment of the present invention.

Referring to FIG. 20, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, if a drag or flicking touch, which has specific directionality, is inputted to the chat content display screen 200 [FIG. 20 (a)], the controller 180 may shift the chat content display screen 200 in a direction corresponding to the drag or flicking touch and may then display a keypad 350 in a region between an initial position of the chat content display screen 200 and the shifted position [Fig. 20 (b)].

In doing so, the keypad 350 may provide Korean/English/numeral/symbol/emoticon/special character input mode in accordance with a user's selection.

### [10^{th} Embodiment]

According to a 10^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, if a specific 1^{st} region 200A is dragged & dropped to a specific 2^{nd} region 200B, the 1^{st} and 2^{nd} regions 200A and 200B may be integrated into a new region.

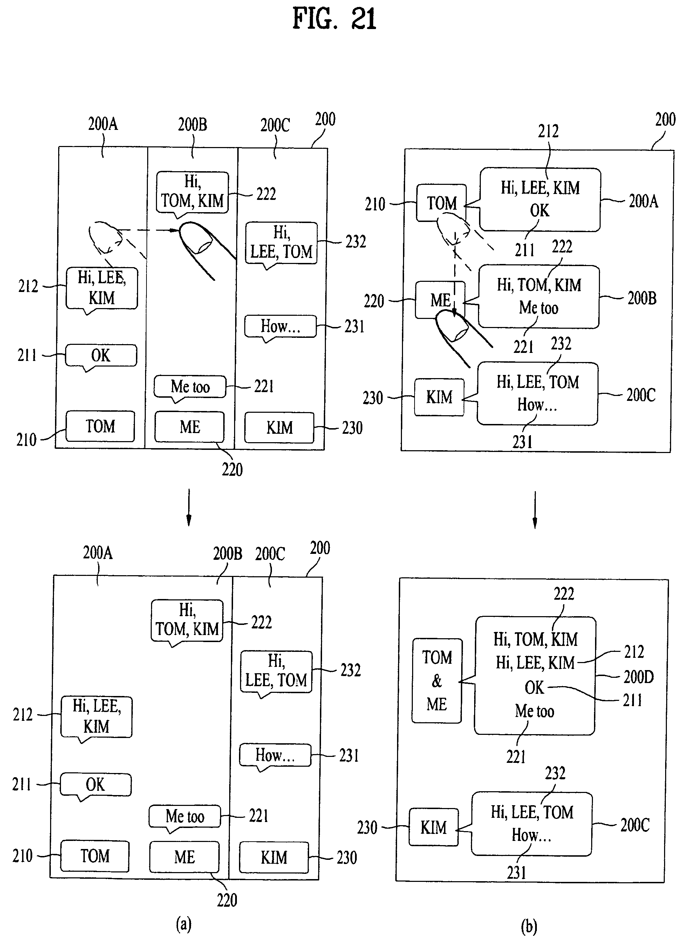

In the following description, the 10^{th} embodiment of the present invention is explained in detail with reference to FIG. 21.

FIG. 21 is a diagram of a screen for a process for controlling a screen, on which contents of a chat with counterpart terminals are displayed, according to a 10^{th} embodiment of the present invention.

Referring to FIG. 21, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, referring to FIG. 21 (a), if the 1^{st} region 200A is dropped & dragged to the 2^{nd} region 200B, the controller 180 may integrate the 1^{st} and 2^{nd} regions 200A and 200B into a new region 200D and may arrange and display the chat contents 211, 212, 221 and 222 of the 1^{st} and 2^{nd} regions 200A and 200B on the new region 200D in order of recently transmitted/received time order.

Moreover, referring to FIG. 21 (b), if an icon 210 indicating a 1^{st} counterpart (TOM) is dragged & dropped to an icon 220 indicating a user (ME), the controller 180 may integrate 1^{st} and 2^{nd} word balloons 200A and 200B into a new word balloon 200D and may arrange and display the chat contents 211, 212, 221 and 222 of the 1^{st} and 2^{nd} word balloons 200A and 200B on the new word balloon 200D in order of recently transmitted/received time order.

[11^{th} Embodiment] The features of said embodiment may form part of the claimed invention.

According to an 11^{th} embodiment of the present invention, while the corresponding chat contents 211, 212, 221, 222, 231 and 232 are arranged and displayed on the corresponding regions 200A, 200B and 200C partitioned by the steps S140 and S150 shown in FIG. 4, respectively, a position of a specific region may be shifted.

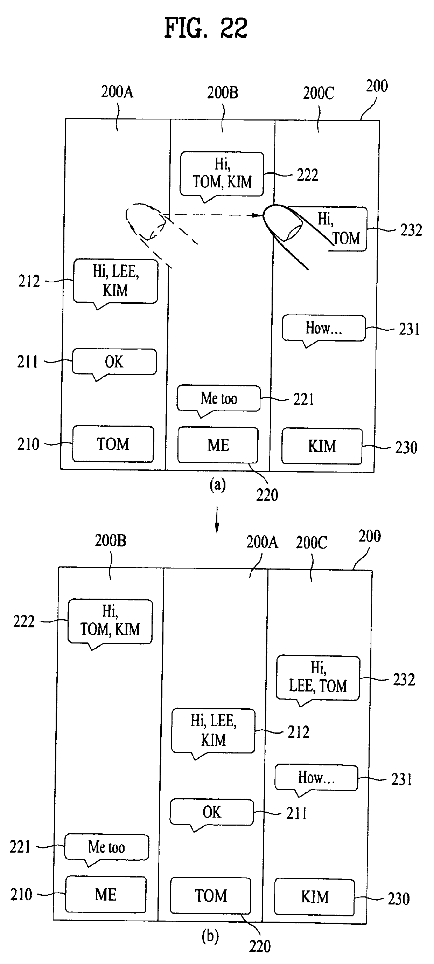

In the following description, the 11^{th} embodiment of the present invention is explained in detail with reference to FIG. 22.

FIG. 22 is a diagram of a screen for a process for controlling a screen, on which contents of a chat with counterpart terminals are displayed, according to an 11^{th} embodiment of the present invention.

Referring to FIG. 22, the controller 180 arranges and displays the corresponding chat contents 211, 212, 221, 222, 231 and 232 on the corresponding regions 200A, 200B and 200C partitioned by the steps S140 and S150 shown in FIG. 4 in order of recent transmission/reception time, respectively.

In doing so, if the 1^{st} region 200A is shifted between the 2^{nd} region 200B and the 3^{rd} region 200C by drag & drop [FIG. 22 (a), the controller 180 may shift a position of the 1^{st} region 200A between the 2^{nd} region 200B and the 3^{rd} region 200C.

Accordingly, the present invention provides the following effect and/or advantage.

The present invention enables a user to quickly recognize chat contents (e.g., speakers, chat subjects, chat contexts, etc.) of a chat with counterparts in a manner of partitioning a chat content display window into regions per counterpart belonging to a chat group and then arranging and displaying the chat contents of the chat with the corresponding counterparts on the partitioned regions per time line, respectively.

## Claims

1. A mobile terminal (100), comprising:
a wireless communication unit (110) configured to at least transmit or receive a message including content of a chat with at least one terminal belonging to a chat group;
a touchscreen (151) configured to display the content of the chat with the at least one terminal on a screen; and
a controller (180) configured to partition (S140) a display region (200) of the content of the chat within the screen into regions (200A, 200B, 200C) per terminal of the at least one terminal belonging to a chat group, each region of said regions (200A, 200B, 200C) corresponding to a terminal of the at least one terminal belonging to the chat group or to the mobile terminal, at least one region of said regions (200A, 200B, 200C) corresponding to the mobile terminal (100), and to arrange (S150) the content of the chat corresponding to each of the at least one terminal of the partitioned regions in order of time the content of the chat is transmitted or received, respectively,
**characterized in that** when a first region (200A) of the partitioned regions is dragged and dropped between a second region (200B) of the partitioned regions and a third region (200C) of the partitioned regions, the controller (180) is further configured to shift the first region (200A) between the second region (200B) and third region (200C), and
wherein when the first region (200A) is dragged and dropped to the second region (200B), the controller is further configured to control the wireless communication to transmit the content of the chat displayed in the first region (200A) to a contact of a terminal corresponding to the second region (200B).

2. The mobile terminal of claim 1, wherein the controller (180) is further configured to partition the display region (200) of the content of the chat in a vertical direction and arrange the content of the chat corresponding to each of the at least one terminal in the partitioned regions to be displayed in the vertical direction, respectively,
wherein the controller (180) is further configured to partition the display region (200) of the content of the chat in a horizontal direction, and arrange the content of the chat corresponding to each the at least one terminal in the partitioned regions to be displayed in the horizontal direction, respectively.

3. The mobile terminal (100) of claim 1, wherein the controller (180) is further configured to create and display information identifying each the at least one terminal in the corresponding partitioned region and control the identifying information of a specific terminal of the at least one terminal to be displayed in an identifiable manner from other identifying information, when the specific terminal is transmitting a chat content or entering a chat content to transmit.

4. The mobile terminal (100) of claim 1, wherein the controller (180) is further configured to control the partitioned region of a specific terminal of the at least one terminal to be displayed in an identifiable manner from other partitioned regions, when the specific terminal is transmitting a chat content or entering a chat content to transmit.

5. The mobile terminal (100) of claim 1, wherein the controller (180) is further configured to display a keypad (350) for an input of character between an initial position of the content of the chat and a shifted position within the screen, when the content of the chat is shifted in a specific direction within the screen.

6. The mobile terminal (100) of claim 1, wherein the controller (180) is further configured to enlarge and display a selected specific partitioned region and the content in the selected specific partitioned region, when the specific partitioned region is selected from the partitioned regions,
wherein the controller (180) is further configured to enlarge and display a selected specific content of the chat, when the specific content of the chat in a specific partitioned region among the partitioned regions is selected.

7. The mobile terminal (100) of claim 1, wherein the controller (180) is further configured to delete a selected specific partitioned region or withdraw a terminal corresponding to the selected specific portioned region, when the specific partitioned region is selected from the partitioned regions.

8. The mobile terminal (100) of claim 1, wherein the controller (180) is further configured to display check boxes (340) on the content of the chat in a selected specific partitioned region to allow selection of multiple portions of the content of the chat.

9. The mobile terminal (100) of claim 1, wherein the controller (180) is further configured to save the content of the chat in a selected specific partitioned region as a file in a memory (160) of the mobile terminal (100) when the specific partitioned region is selected from the partitioned regions,
wherein a name of a terminal corresponding to the selected specific partitioned region is included in a name of the file.

10. The mobile terminal (100) of claim 1, wherein the controller (180) is further configured to control the content of the chat in the partitioned regions and rank recently transmitted or received content for display in an identifiable time order.

11. The mobile terminal (100) of claim 1, wherein the controller (180) is further configured to integrate a first region (200A) and a second region (200B) of the partitioned regions into a new region and arrange the content of the chat in the first and second regions for display in the new region when the first region (200A) is dragged and dropped to the second region(200B).

12. The mobile terminal (100) of claim 1, wherein the controller (180) is further configured to keep a display of a selected content of the chat in the display region of the content of the chat, when the content of the chat in the partitioned regions is selected.

13. A method of controlling a mobile terminal (100), the method comprising:
at least transmitting or receiving (S110, S120), via a wireless communication unit (110) of the mobile terminal, a message including content of a chat with at least one terminal belonging to a chat group;
displaying (S130), on a touchscreen (151) of the mobile terminal, the content of the chat with the at least one terminal;
partitioning (S140), by a controller (180) of the mobile terminal, a display regionof the content of the chat within the screen into regions (200A, 200B, 200C) per terminal of the at least one terminal belonging to a chat group, each region of said regions (200A, 200B, 200C) corresponding to a terminal of the at least one terminal belonging to the chat group or to the mobile terminal, at least one region of said regions (200A, 200B, 200C) corresponding to the mobile terminal;
arranging (S150), by the controller, the content of the chat corresponding to each of the at least one terminal in the partitioned regions (200A, 200B, 200C) in order of time the content of the chat is transmitted or received, respectively;
**characterized in that** when a first region (200A) of the partitioned regions (200A, 200B, 200C) is dragged and dropped between a second region (200B) of the partitioned regions (200A, 200B, 200C) and a third region (200C) of the partitioned regions (200A, 200B, 200C), shifting the first region (200A) between the second region (200B) and third region (200C); and
when the first region (200A) is dragged and dropped to the second region (200B), transmitting, via the wireless communication unit, the content of the chat displayed in the first region (200A) to a contact of a terminal corresponding to the second region (200B).

## Patentansprüche

1. Mobiles Endgerät (100), das aufweist:
eine drahtlose Kommunikationseinheit (110), die aufgebaut ist, um wenigstens eine Nachricht mit Inhalt eines Chats mit wenigstens einem Endgerät, das zu einer Chatgruppe gehört, zu senden oder zu empfangen;
einen Berührungsbildschirm (151), der aufgebaut ist, um den Inhalt des Chats mit dem wenigstens einen Endgerät auf einem Bildschirm anzuzeigen; und
eine Steuerung (180), die konfiguriert ist, um einen Anzeigebereich (200) des Inhalts des Chats innerhalb des Bildschirms in Bereiche (200A, 200B, 200C) pro Endgerät des wenigstens einen Endgeräts, das zu einer Chatgruppe gehört, zu unterteilen (S140), wobei jeder Bereich der Bereiche (200A, 200B, 200C) einem Endgerät des wenigstens einen Endgeräts, das zu der Chatgruppe gehört, oder dem mobilen Endgerät entspricht, wobei wenigstens ein Bereich der Bereiche (200A, 200B, 200C) dem mobilen Endgerät (100) entspricht, und um den Inhalt des Chats, der jedem des wenigstens einen Endgeräts der unterteilten Bereiche entspricht, in der zeitlichen Reihenfolge anzuordnen, in der der Inhalt des Chats jeweils gesendet oder empfangen wird,
**dadurch gekennzeichnet, dass** die Steuerung (180) ferner konfiguriert ist, um den ersten Bereich (200A) zwischen den zweiten Bereich (200B) und den dritten Bereich (200C) zu verschieben, wenn ein erster Bereich (200A) der unterteilten Bereiche zwischen einen zweiten Bereich (200B) der unterteilten Bereiche und einen dritten Bereich (200C) der unterteilten Bereiche gezogen und fallen gelassen wird, und
wobei die Steuerung ferner konfiguriert ist, um den Inhalt des in dem ersten Bereich (200A) angezeigten Chats an einen Kontakt eines Endgeräts zu senden, das dem zweiten Bereich (200B) entspricht, wenn der erste Bereich (200A) in den zweiten Bereich (200B) gezogen und fallen gelassen wird.

2. Mobiles Endgerät nach Anspruch 1, wobei die Steuerung (180) ferner konfiguriert ist, um den Anzeigebereich (200) des Inhalts des Chats in einer Vertikalrichtung zu unterteilen und den Inhalt des Chats entsprechend jedem des wenigstens einen Endgeräts in den unterteilten Bereichen, die angezeigt werden sollen, jeweils in der Vertikalrichtung anzuordnen,
wobei die Steuerung (180) ferner konfiguriert ist, um den Anzeigebereich (200) des Inhalts des Chats in einer Horizontalrichtung zu unterteilen und den Inhalt des Chats entsprechend jedem des wenigstens einen Endgeräts in den unterteilten Bereichen, die angezeigt werden sollen, jeweils in der Horizontalrichtung anzuordnen.

3. Mobiles Endgerät (100) nach Anspruch 1, wobei die Steuerung (180) ferner konfiguriert ist, um Informationen zu erzeugen und anzuzeigen, die jedes des wenigstens einen Endgeräts in dem entsprechenden unterteilten Bereich identifizieren, und die Identifikationsinformation eines spezifischen Endgeräts des wenigstens einen Endgeräts zu steuern, so dass sie in einer gegenüber anderen Identifikationsinformation identifizierbaren Weise angezeigt werden, wenn das spezifische Endgerät einen Chatinhalt sendet oder einen Chatinhalt zum Senden eingibt.

4. Mobiles Endgerät (100) nach Anspruch 1, wobei die Steuerung (180) ferner konfiguriert ist, um den unterteilten Bereich eines spezifischen Endgeräts des wenigstens einen Endgeräts, zu steuern, so dass er in einer von anderen unterteilten Bereichen identifizierbaren Weise angezeigt wird, wenn das spezifische Endgerät einen Chatinhalt sendet oder einen Chatinhalt zum Senden eingibt.

5. Mobiles Endgerät (100) nach Anspruch 1, wobei die Steuerung (180) ferner konfiguriert ist, um eine Tastatur (350) für eine Eingabe eines Zeichens zwischen einer Anfangsposition des Inhalts des Chats und einer innerhalb des Bildschirms verschobenen Position anzuzeigen, wenn der Inhalt des Chats in eine spezifische Richtung innerhalb des Bildschirms verschoben wird.

6. Mobiles Endgerät (100) nach Anspruch 1, wobei die Steuerung (180) ferner konfiguriert ist, um einen ausgewählten spezifischen unterteilten Bereich und den Inhalt in dem ausgewählten spezifischen unterteilten Bereich zu vergrößern und anzuzeigen, wenn der spezifische unterteilte Bereich aus den unterteilten Bereichen ausgewählt wird,
wobei die Steuerung (180) ferner konfiguriert ist, um einen ausgewählten spezifischen Inhalt des Chats zu vergrößern und anzuzeigen, wenn der spezifische Inhalt des Chats in einem spezifischen unterteilten Bereich aus den unterteilten Bereichen ausgewählt wird.

7. Mobiles Endgerät (100) nach Anspruch 1, wobei die Steuerung (180) ferner konfiguriert ist, um einen ausgewählten spezifischen unterteilten Bereich zu löschen oder ein Endgerät, das dem ausgewählten spezifischen unterteilten Bereich entspricht, weg zu nehmen, wenn der spezifische unterteilte Bereich aus den unterteilten Bereichen ausgewählt wird.

8. Mobiles Endgerät (100) nach Anspruch 1, wobei die Steuerung (180) ferner konfiguriert ist, um Ankreuzfelder (340) auf dem Inhalt des Chats in einem ausgewählten spezifischen unterteilten Bereich anzuzeigen, um die Auswahl mehrerer Abschnitte des Inhalts des Chats zuzulassen.

9. Mobiles Endgerät (100) nach Anspruch 1, wobei die Steuerung (180) konfiguriert ist, um den Inhalt in einem ausgewählten spezifischen unterteilten Bereich als eine Datei in einem Speicher (160) des mobilen Endgeräts (100) zu speichern, wenn der spezifische unterteilte Bereich aus den unterteilten Bereichen ausgewählt wird,
wobei ein Name eines Endgeräts, der dem ausgewählten spezifischen unterteilten Bereich entspricht, in einem Namen der Datei enthalten ist.

10. Mobiles Endgerät (100) nach Anspruch 1, wobei die Steuerung (180) ferner konfiguriert ist, um den Inhalt des Chats in den unterteilten Bereichen zu steuern und in letzter Zeit gesendeten oder empfangenen Inhalt für die Anzeige in einer identifizierbaren zeitlichen Reihenfolge zu ordnen.

11. Mobiles Endgerät (100) nach Anspruch 1, wobei die Steuerung (180) ferner konfiguriert ist, um einen ersten Bereich (200A) und einen zweiten Bereich (200B) der unterteilten Bereiche zu einem neuen Bereich zu integrieren und den Inhalt des Chats in den ersten und zweiten Bereichen für die Anzeige in dem neuen Bereich anzuordnen, wenn der erste Bereich (100A) in den zweiten Bereich gezogen und fallen gelassen wird.

12. Mobiles Endgerät (100) nach Anspruch 1, wobei die Steuerung (180) ferner konfiguriert ist, um eine Anzeige eines ausgewählten Inhalts des Chats in dem Anzeigebereich des Inhalts des Chats zu behalten, wenn der Inhalt des Chats in den unterteilten Bereichen ausgewählt wird.

13. Steuerungsverfahren für ein mobiles Endgerät (100), wobei das Verfahren aufweist:
wenigstens Senden oder Empfangen (S110, S120) einer Nachricht mit Inhalt eines Chats mit wenigstens einem Endgerät, das zu einer Chatgruppe gehört, über eine drahtlose Kommunikationseinheit (110) des mobilen Endgeräts;
Anzeigen (S130) des Inhalts des Chats mit dem wenigstens einen Endgerät auf einem Berührungsbildschirm (151); und
Unterteilen (S140) eines Anzeigebereichs des Inhalts des Chats innerhalb des Bildschirms in Bereiche (200A, 200B, 200C) pro Endgerät des wenigstens einen Endgeräts, das zu einer Chatgruppe gehört, durch eine Steuerung (180) des mobilen Endgeräts, wobei jeder Bereich der Bereiche (200A, 200B, 200C) einem Endgerät des wenigstens einen Endgeräts, das zu der Chatgruppe gehört, oder dem mobilen Endgerät entspricht, wobei wenigstens ein Bereich der Bereiche (200A, 200B, 200C) dem mobilen Endgerät (100) entspricht;
Anordnen (S150) des Inhalts des Chats, der jedem des wenigstens einen Endgeräts in den unterteilten Bereichen (200A, 200B, 200C) entspricht, in der zeitlichen Reihenfolge, in der der Inhalt des Chats jeweils gesendet oder empfangen wird, durch die Steuerung;
**dadurch gekennzeichnet, dass** der erste Bereich (200A) zwischen den zweiten Bereich (200B) und den dritten Bereich (200C) verschoben wird, wenn ein erster Bereich (200A) der unterteilten Bereiche (200A, 200B, 200C) zwischen einen zweiten Bereich (200B) der unterteilten Bereiche (200A, 200B, 200C) und einen dritten Bereich (200C) der unterteilten Bereiche (200A, 200B, 200C) gezogen und fallen gelassen wird, und
der Inhalt des in dem ersten Bereich (200A) angezeigten Chats an einen Kontakt eines Endgeräts gesendet wird, das dem zweiten Bereich (200B) entspricht, wenn der erste Bereich (200A) in den zweiten Bereich (200B) gezogen und fallen gelassen wird.

## Revendications

1. Terminal mobile (100), comprenant :
une unité de communication sans fil (110) configurée pour au moins transmettre ou recevoir un message comprenant le contenu d'une conversation avec au moins un terminal appartenant à un groupe de conversation ;
un écran tactile (151) configuré pour afficher le contenu de la conversation avec l'au moins un terminal sur un écran ; et
un contrôleur (180) configuré pour partitionner (S140) une région d'affichage (200) du contenu de la conversation dans l'écran en régions (200A, 200B, 200C) par terminal de l'au moins un terminal appartenant à un groupe de conversation, chaque région desdites régions (200A, 200B, 200C) correspondant à un terminal de l'au moins un terminal appartenant au groupe de conversation ou au terminal mobile, au moins une région desdites régions (200A, 200B, 200C) correspondant au terminal mobile (100), et agencer (S150) le contenu de la conversation correspondant à chacun de l'au moins un terminal des régions partitionnées dans l'ordre chronologique où le contenu de la conversation est transmis ou reçu, respectivement, **caractérisé en ce que**, lorsqu'une première région (200A) des régions partitionnées est glissée et déposée entre une deuxième région (200B) des régions partitionnées et une troisième région (200C) des régions partitionnées, le contrôleur (180) est en outre configuré pour déplacer la première région (200A) entre la deuxième région (200B) et la troisième région (200C), et
dans lequel, lorsque la première région (200A) est glissée et déposée dans la deuxième région (200B), le contrôleur est en outre configuré pour contrôler la communication sans fil pour transmettre le contenu de la conversation affiché dans la première région (200A) à un contact d'un terminal correspondant à la deuxième région (200B).

2. Terminal mobile selon la revendication 1, dans lequel le contrôleur (180) est en outre configuré pour partitionner la région d'affichage (200) du contenu de la conversation dans un sens vertical et agencer le contenu de la conversation correspondant à chacun de l'au moins un terminal dans les régions partitionnées à afficher dans le sens vertical, respectivement,
dans lequel le contrôleur (180) est en outre configuré pour partitionner la région d'affichage (200) du contenu de la conversation dans un sens horizontal, et agencer le contenu de la conversation correspondant à chacun de l'au moins un terminal dans les régions partitionnées à afficher dans le sens horizontal, respectivement.

3. Terminal mobile (100) selon la revendication 1, dans lequel le contrôleur (180) est en outre configuré pour créer et afficher des informations identifiant chacun de l'au moins un terminal dans la région partitionnée correspondante et contrôler les informations d'identification d'un terminal spécifique de l'au moins un terminal à afficher de manière identifiable par rapport à d'autres informations d'identification, lorsque le terminal spécifique transmet le contenu d'une conversation ou entre le contenu d'une conversation pour le transmettre.

4. Terminal mobile (100) selon la revendication 1, dans lequel le contrôleur (180) est en outre configuré pour contrôler la région partitionnée d'un terminal spécifique de l'au moins un terminal à afficher de manière identifiable par rapport à d'autres régions partitionnées, lorsque le terminal spécifique transmet le contenu d'une conversation ou entre le contenu d'une conversation pour le transmettre.

5. Terminal mobile (100) selon la revendication 1, dans lequel le contrôleur (180) est en outre configuré pour afficher un clavier (350) pour une saisie de caractère entre une position initiale du contenu de la conversation et une position déplacée dans l'écran, lorsque le contenu de la conversation est déplacé dans un sens spécifique dans l'écran.

6. Terminal mobile (100) selon la revendication 1, dans lequel le contrôleur (180) est en outre configuré pour agrandir et afficher une région partitionnée spécifique sélectionnée et le contenu dans la région partitionnée spécifique sélectionnée, lorsque la région partitionnée spécifique est sélectionnée parmi les régions partitionnées, dans lequel le contrôleur (180) est en outre configuré pour agrandir et afficher un contenu spécifique sélectionné de la conversation, lorsque le contenu spécifique de la conversation dans une région partitionnée spécifique parmi les régions partitionnées est sélectionné.

7. Terminal mobile (100) selon la revendication 1, dans lequel le contrôleur (180) est en outre configuré pour supprimer une région partitionnée spécifique sélectionnée ou pour retirer un terminal correspondant à la région portionnée spécifique sélectionnée, lorsque la région partitionnée spécifique est sélectionnée parmi les régions partitionnées.

8. Terminal mobile (100) selon la revendication 1, dans lequel le contrôleur (180) est en outre configuré pour afficher les cases à cocher (340) sur le contenu de la conversation dans une région partitionnée spécifique sélectionnée pour permettre la sélection de plusieurs portions du contenu de la conversation.

9. Terminal mobile (100) selon la revendication 1, dans lequel le contrôleur (180) est en outre configuré pour enregistrer le contenu de la conversation dans une région partitionnée spécifique sélectionnée sous forme de fichier dans une mémoire (160) du terminal mobile (100) lorsque la région partitionnée spécifique est sélectionnée parmi les régions partitionnées,
dans lequel un nom d'un terminal correspondant à la région partitionnée spécifique sélectionnée est compris dans un nom du fichier.

10. Terminal mobile (100) selon la revendication 1, dans lequel le contrôleur (180) est en outre configuré pour contrôler le contenu de la conversation dans les régions partitionnées et classer le contenu récemment transmis ou reçu pour un affichage dans un ordre chronologique identifiable.

11. Terminal mobile (100) selon la revendication 1, dans lequel le contrôleur (180) est en outre configuré pour intégrer une première région (200A) et une deuxième région (200B) des régions partitionnées dans une nouvelle région et agencer le contenu de la conversation dans les première et deuxième régions pour un affichage dans la nouvelle région lorsque la première région (200A) est glissée et déposée dans la deuxième région (200B).

12. Terminal mobile (100) selon la revendication 1, dans lequel le contrôleur (180) est en outre configuré pour conserver un affichage d'un contenu sélectionné de la conversation dans la région d'affichage du contenu de la conversation, lorsque le contenu de la conversation dans les régions partitionnées est sélectionné.

13. Procédé de contrôle d'un terminal mobile (100), le procédé comprenant :
au moins la transmission ou la réception (S110, S120), via une unité de communication sans fil (110) du terminal mobile, d'un message comprenant le contenu d'une conversation avec au moins un terminal appartenant à un groupe de conversation ;
l'affichage (S130), sur un écran tactile (151) du terminal mobile, du contenu de la conversation avec l'au moins un terminal ;
le partitionnement (S140), par un contrôleur (180) du terminal mobile, d'une région d'affichage du contenu de la conversation dans l'écran en régions (200A, 200B, 200C) par terminal de l'au moins un terminal appartenant à un groupe de conversation, chaque région desdites régions (200A, 200B, 200C) correspondant à un terminal de l'au moins un terminal appartenant à un groupe de conversation ou au terminal mobile, au moins une région desdites régions (200A, 200B, 200C) correspondant au terminal mobile ;
l'agencement (S150), par le contrôleur, du contenu de la conversation correspondant à chacun de l'au moins un terminal dans les régions partitionnées (200A, 200B, 200C) dans l'ordre chronologique où le contenu de la conversation est transmis ou reçu, respectivement ;
**caractérisé par**, lorsqu'une première région (200A) des régions partitionnées (200A, 200B, 200C) est glissée et déposée entre une deuxième région (200B) des régions partitionnées (200A, 200B, 200C) et une troisième région (200C) des régions partitionnées (200A, 200B, 200C), le déplacement de la première région (200A) entre la deuxième région (200B) et la troisième région (200C), et
lorsque la première région (200A) est glissée et déposée dans la deuxième région (200B), la transmission, via l'unité de communication sans fil, du contenu de la conversation affiché dans la première région (200A) à un contact d'un terminal correspondant à la deuxième région (200B).
